# EUROPEAN PATENT APPLICATION

(11) **EP 4 704 163 A1**
(43) Date of publication of application: **04.03.2026**
(21) Application number: 23934499.7
(22) Date of filing: 26.04.2023
(51) Int. Cl.: H01M 4/13, H01M 10/0583

(54) **ELECTRODE PLATE, ELECTRODE ASSEMBLY, BATTERY CELL, BATTERY AND ELECTRICAL DEVICE**

(71) Applicant: Contemporary Amperex Technology Co., Limited, Ningde, Fujian 352100 (CN)
(72) Inventor: LI, Quanguo, Ningde, Fujian 352100 (CN); YE, Yonghuang, Ningde, Fujian 352100 (CN); OUYANG, Shaocong, Ningde, Fujian 352100 (CN); CHEN, Jiahua, Ningde, Fujian 352100 (CN)
(74) Representative: Gong, Jinping
(86) International application number: PCT/CN2023/090961
(87) International publication number: WO 2024/221297

(57) **Abstract**

An electrode plate (30), an electrode assembly (22), a battery cell (20), a battery (10), an electric device, and a method for manufacturing electrode assembly (22) are provided. The electrode plate (30) includes: a laminated segment (31) and a bending segment (32), the bending segment (32) is connected to the laminated segment (31), and the bending segment (32) is configured for bending, where a region of the laminated segment (31) close to the bending segment (32) is provided with a reinforcing structure (33).

## Description

### TECHNICAL FIELD

This application relates to the field of battery technology, in particular to an electrode plate, an electrode assembly, a battery cell, a battery, an electric device, and a method for manufacturing electrode assembly.

### BACKGROUND

With the continuous advancement of battery technology, various new energy industries utilizing batteries as energy storage devices have experienced rapid development. To increase the energy density of battery cells, electrode plates in battery cells are typically designed to be relatively thin. However, such electrode plates are prone to misalignment during bending, which affects the processing yield of the electrode assembly and may also impact the use performance of the electrode assembly, potentially leading to safety incidents.

### SUMMARY

An embodiment of this application provides an electrode plate, an electrode assembly, a battery cell, a battery, an electric device, and a method for manufacturing electrode assembly, which can improve the processing efficiency of the electrode assembly.

According to a first aspect, an electrode plate is provided, including: a laminated segment and a bending segment, where the bending segment is connected to the laminated segment, the bending segment is configured for bending, where a region of the laminated segment close to the bending segment is provided with a reinforcing structure.

Therefore, for the electrode plate of this embodiment of this application, by providing the reinforcing structure in the region of the laminated segment close to the bending segment, the strength of the region of the laminated segment close to the bending segment can be enhanced. Due to the high strength of the region of the laminated segment close to the bending segment, the position of the bending segment can be located through the reinforcing structure. During a process of bending the electrode plate to form an electrode assembly, a bending position of the electrode plate can be restricted, allowing the electrode plate to bend at the bending segment, reducing bending misalignment of the electrode plate, also reducing wrinkles in the region of the laminated segment close to the bending segment, and improving the processing precision of the electrode assembly, thereby improving the processing yield and performance of the electrode assembly, for example, reducing lithium precipitation caused by electrode plate misalignment or wrinkles, thereby improving the reliability of the electrode assembly.

In some embodiments, the reinforcing structure includes a protrusion structure protruding from a surface of the laminated segment. The reinforcing structure is implemented through the protrusion structure provided, and the structure is simple and easy to achieve. In addition, a formation method of the protrusion structure can be flexibly configured based on practical applications to facilitate processing.

In some embodiments, a ratio of a protrusion height of the protrusion structure relative to the laminated segment to a thickness of the laminated segment is within a value range of [0.3, 50], optionally [5, 40], and preferably [8, 20].

In consideration of the requirements on the energy density, performance, and the like within a battery cell, the thickness of the laminated segment is within a limited value range. If the ratio of the protrusion height to the thickness of the laminated segment is set to be too small, the protrusion height will be too small, that is, a strength increased by the protrusion structure is also too small, and the strength of the reinforcing structure is slightly different from the strength of other regions of the laminated segment, making the reinforcing structure likely unable to restrict and locate the bending segment. Conversely, if the ratio of the protrusion height to the thickness of the laminated segment is set to be too large, the protrusion height will be too large, which, on one hand, increases a distance between multiple electrode plate layers after the electrode plate is processed into an electrode assembly, thereby reducing a space utilization rate of the electrode assembly within the battery cell and consequently reducing the energy density of the battery cell; on the other hand, if the protrusion structure is formed by stamping, an excessively large height of the stamped protrusion structure is likely to cause damage or even fracture of the electrode plate at the stamped position, thereby affecting the processing efficiency and yield of the electrode plate and the electrode assembly.

In some embodiments, the protrusion structure protrudes relative to a first surface of the laminated segment and is recessed relative to a second surface of the laminated segment, where the first surface and the second surface are disposed opposite each other. Such a protrusion structure is simple to process and easy to achieve, without requiring an additional structure, thereby avoiding excessive weight increase of the electrode plate.

In some embodiments, the protrusion structure includes a reinforcing sheet disposed on a surface of the laminated segment. Selecting an appropriate material to process the reinforcing sheet based on actual needs can correspondingly obtain a reinforcing structure with specific strength, offering a more flexible and effective implementation method.

In some embodiments, a ratio of a stiffness of the reinforcing structure to a stiffness of other regions of the laminated segment than the reinforcing structure is within a value range of [1.5, 65], optionally [2, 40], and preferably [10, 25]. If the ratio of the stiffness of the reinforcing structure to the stiffness of other regions of the laminated segment is too small, since the stiffness of the reinforcing structure is greater than that of other regions of the laminated segment, the strength of the reinforcing structure is slightly different from the strength of other regions of the laminated segment, so that the reinforcing structure is likely unable to restrict and locate the bending segment. Conversely, if the ratio of the stiffness of the reinforcing structure to the stiffness of other regions of the laminated segment is too large, due to structural and material limitations of the laminated segment, excessively high requirements are imposed on the strength of the reinforcing structure, increasing the difficulty in processing and material selection and also increasing costs.

In some embodiments, the stiffness of the reinforcing structure is within a value range of [10 N/m, 300 N/m], preferably [50 N/m, 150 N/m]. Since the stiffness of the reinforcing structure should be greater than that of other regions of the laminated segment, the value of the stiffness of the reinforcing structure should not be too small, to ensure that the reinforcing structure can restrict and locate the bending segment. Conversely, if the stiffness of the reinforcing structure is set to be too large, excessively high requirements are imposed on the strength of the reinforcing structure, increasing the difficulty in processing and material selection of the reinforcing structure and also increasing costs.

In some embodiments, the reinforcing structure does not cross a centerline of the laminated segment in a length direction of the electrode plate, and a ratio of a span of the reinforcing structure along the length direction of the electrode plate to a length of the laminated segment is within a value range of [10%, 50%). Since the reinforcing structure does not cross the centerline of the laminated segment in the length direction of the electrode plate, the ratio of the span of the reinforcing structure along the length direction of the electrode plate to the length of the laminated segment is less than 50%. Conversely, the ratio of the span of the reinforcing structure along the length direction of the electrode plate to the length of the laminated segment should not be set to be too small; and sufficient span of the reinforcing structure can enhance the reinforcement effect of the reinforcing structure.

In some embodiments, the ratio of the span of the reinforcing structure along the length direction of the electrode plate to the length of the laminated segment is within a value range of [10%, 100%]. This ratio should not be set to be too small. For example, this ratio can be typically set to be greater than or equal to 10% to ensure that the span of the reinforcing structure is sufficiently large to enhance the reinforcement effect of the reinforcing structure.

In some embodiments, a ratio of a width sum of all the reinforcing structures arranged along a width direction of the electrode plate to a width of the electrode plate is within a value range of [1/3, 0.8], preferably [0.4, 0.6]. If this ratio is set to be too small, most regions in the width direction of the electrode plate are not provided with the reinforcing structure, making the electrode plate prone to misalignment in these regions during bending, thereby affecting the processing yield of the electrode assembly and also affecting the use performance of the electrode assembly. Conversely, if this ratio is set to be too large, the reinforcing structure occupies excessive regions, which may affect the strength of these regions. Particularly when the reinforcing structure is formed by stamping, excessive distribution of the reinforcing structure along the width direction of the electrode plate may cause a failure in enhancing the structural strength of a region of the laminated segment close to the bending segment, so that misalignment still occurs during bending of the electrode plate, which affects the processing yield of the electrode assembly and may also affect the use performance of the electrode assembly.

In some embodiments, a ratio of a shortest length between an end portion of the reinforcing structure close to the bending segment and a centerline of the bending segment to a thickness of the electrode plate is within a value range of [0.016, 0.5], preferably [0.05, 0.4]. If this ratio is too small, since the electrode plate is typically thin, the reinforcing structure is too close to the centerline of the bending segment, so that a range for the reinforcing structure to restrict the bending segment is too small during bending of the electrode plate, making it difficult to bend the electrode plate and increasing the processing difficulty of the electrode assembly. Conversely, if this ratio is too large, the reinforcing structure is too far from the centerline of the bending segment, making it difficult for the reinforcing structure to restrict the bending segment, so that the electrode plate is still prone to misalignment during bending, thereby affecting the processing efficiency and yield of the electrode assembly.

In some embodiments, the reinforcing structure is inclined relative to the width direction of the electrode plate, making the reinforcing structure to provide a reinforcement effect in a direction perpendicular to the width direction of the electrode plate, thereby restricting a bending position of the electrode plate.

In some embodiments, an included angle between the reinforcing structure and the width direction of the electrode plate is within a value range of [45°, 135°]. If this included angle is set to be too large or too small, a reinforcement effect of the reinforcing structure in the direction perpendicular to the width direction of the electrode plate is far less than that in a direction parallel to the width direction of the electrode plate, reducing the anti-bending and anti-misalignment effects of the reinforcing structure.

In some embodiments, a region of the laminated segment close to the bending segment is provided with multiple reinforcing structures arranged along the width direction of the electrode plate, increasing the structural strength of different regions in the width direction of the electrode plate, thereby reducing the likelihood of localized misalignment during bending of the electrode plate along a bending region.

In some embodiments, the multiple reinforcing structures are arranged at an equal interval along the width direction of the electrode plate to facilitate processing and to ensure a more uniform arrangement of the multiple reinforcing structures, thereby uniformly increasing the structural strength of different regions in the width direction of the electrode plate.

In some embodiments, the multiple reinforcing structures protrude from the surface of the laminated segment in a same protrusion direction. If the multiple reinforcing structures are arranged along the width direction of the electrode plate in the same protrusion direction, the multiple reinforcing structures can occupy a same side space of the electrode plate, reducing gaps between multiple layers of structures of the electrode assembly, thereby increasing the space utilization rate of the electrode assembly within the battery cell and consequently increasing the energy density of the battery cell.

In some embodiments, the electrode plate includes multiple laminated segments, the bending segment is connected to a first laminated segment and a second laminated segment among the multiple laminated segments, and a region of the first laminated segment close to the bending segment and a region of the second laminated segment close to the bending segment are each provided with the reinforcing structure. Thus, a region between the reinforcing structure of the first laminated segment and the reinforcing structure of the second laminated segment includes the bending segment, allowing the reinforcing structure of the first laminated segment and the reinforcing structure of the second laminated segment to jointly restrict the position of the bending segment. This reduces misalignment, bending, and wrinkles of the first laminated segment and the second laminated segment during bending of the electrode plate, more accurately locating the bending segment, thereby improving the processing efficiency and yield of the electrode assembly and consequently improving the performance of the battery cell.

In some embodiments, the reinforcing structure of the first laminated segment and the reinforcing structure of the second laminated segment are correspondingly positioned in the width direction of the electrode plate; and/or, the reinforcing structure of the first laminated segment and the reinforcing structure of the second laminated segment are misaligned in the width direction of the electrode plate.

In the case where the reinforcing structure of the first laminated segment and the reinforcing structure of the second laminated segment are correspondingly positioned in the width direction of the electrode plate, when the electrode plate is bent along the bending segment, the reinforcing structure of the first laminated segment and the reinforcing structure of the second laminated segment can substantially overlap, providing a simple structure that is easy to process. In the case where the reinforcing structure of the first laminated segment and the reinforcing structure of the second laminated segment are misaligned, when the electrode plate is bent along the bending segment, the reinforcing structure of the first laminated segment and the reinforcing structure of the second laminated segment cannot fully overlap. This allows more flexible positioning of the reinforcing structure of the first laminated segment and the reinforcing structure of the second laminated segment. When the electrode plate is bent to form an electrode assembly, space occupied by the reinforcing structure of the first laminated segment and the reinforcing structure of the second laminated segment can be adjusted, rationally utilizing the space between different electrode plate layers, thereby increasing the space utilization rate of the electrode assembly within the battery cell and consequently increasing the energy density of the battery cell.

In some embodiments, the reinforcing structure of the first laminated segment and the reinforcing structure of the second laminated segment are arranged at an equal interval in the width direction of the electrode plate. This allows the reinforcing structure of the first laminated segment and the reinforcing structure of the second laminated segment to be uniformly arranged, not only facilitating processing but also ensuring uniform distribution of the reinforcing structures, thereby reducing the risk of misalignment in different regions of the first laminated segment and second laminated segment during bending of the electrode plate, thereby improving the processing efficiency and yield of the electrode assembly.

In some embodiments, the reinforcing structure of the first laminated segment includes a protrusion structure protruding from a surface of the first laminated segment, and the reinforcing structure of the second laminated segment includes a protrusion structure protruding from a surface of the second laminated segment, where a protrusion direction of the reinforcing structure of the first laminated segment is opposite to a protrusion direction of the reinforcing structure of the second laminated segment. Thus, after the electrode plate is bent along the bending segment, the first laminated segment and second laminated segment are laminated, and the protrusion directions of the reinforcing structure of the first laminated segment and the reinforcing structure of the second laminated segment are the same. Therefore, when the reinforcing structure of the second laminated segment protrudes from one side surface of the second laminated segment and is recessed relative to the other side surface of the second laminated segment, a portion of the reinforcing structure of the first laminated segment protruding from the surface of the first laminated segment can be accommodated in the recessed region of the reinforcing structure of the second laminated segment, thereby reducing gaps between different electrode plate layers, increasing the space utilization rate of the electrode assembly within the battery cell, and consequently increasing the energy density of the battery cell.

In some embodiments, the bending segment is provided with a notch extending along the width direction of the electrode plate. On one hand, the bending segment can be located through the provided notch, reducing deviation of the electrode plate at the bending position, thereby reducing misalignment between different electrode plates of the electrode assembly; on the other hand, the notch can reduce the difficulty in bending and reduce the resistance during bending, thereby improving the processing efficiency of the electrode assembly.

In some embodiments, multiple notches are provided, and the reinforcing structure corresponds to a connecting region between two adjacent notches among the multiple notches, allowing the reinforcing structure to cooperate with the multiple notches to jointly locate and restrict the position of the bending segment and enhance the structural strength of the electrode plate in a region around the bending segment. This minimizes misalignment or wrinkles in different regions of the electrode plate along the width direction during bending of the electrode plate, improving the processing efficiency and yield of the electrode assembly.

In some embodiments, multiple notches are provided, the multiple notches include edge notches located at two ends of the electrode plate in the width direction of the electrode plate and a middle notch located in a middle region of the electrode plate, where a length of the edge notches in the width direction of the electrode plate is greater than a length of the middle notch in the width direction of the electrode plate.

Considering that during bending of the bending segment of the electrode plate, the resistance at edge positions of two ends of the electrode plate in the width direction is greater than that at the middle position, and the crease fluctuation at the edge positions is more significant, setting the length of the edge notches in the width direction to be greater than that of the middle notch can more significantly reduce the resistance at the edge positions of the electrode plate, reduce fluctuations, and further reduce the likelihood of deviation of the electrode plate during bending, thereby reducing the possibility of active material precipitation or electrode assembly failure, and improving the processing efficiency and yield of the electrode assembly.

In some embodiments, multiple notches are provided, and along the width direction of the electrode plate, the lengths of the multiple notches are equal. By setting the dimensions of the multiple notches arranged along the width direction to be equal, the number of adjustments and processing for the dimensions of the notches can be reduced, reducing the processing difficulty and improving the processing efficiency.

In some embodiments, along the length direction of the electrode plate, the notches are located in a middle portion of the bending segment, allowing more accurate positioning when the electrode plate is bent along the provided notches, minimizing misalignment and deviation of the electrode plate to improve the processing efficiency and yield of the electrode assembly.

In some embodiments, the electrode plate is an anode-free negative electrode plate. This electrode plate is thinner, and when assembled into an electrode assembly and disposed within a battery cell, the electrode plate can increase the space utilization rate of the electrode assembly, thereby increasing the energy density of the battery cell. Moreover, due to the smaller thickness of the electrode plate, the electrode plate is more prone to misalignment or wrinkles during bending, and the provision of the reinforcing structure can effectively reduce misalignment and wrinkles, thereby improving the processing efficiency and yield of the electrode assembly.

According to a second aspect, an electrode assembly is provided, including: a first electrode plate, where the first electrode plate is the electrode plate according to the first aspect, and the first electrode plate is configured to be bent at the bending segment.

In some embodiments, the reinforcing structure is an indentation on the surface of the laminated segment. During the bending of a first electrode, the reinforcing structure may be used to restrict the position of the bending segment. Subsequently, as an indentation on the surface of the laminated segment, the reinforcing structure may not occupy the gaps between different electrode plate layers of the electrode assembly, increasing the space utilization rate of the electrode assembly within the battery cell and consequently increasing the energy density of the battery cell.

In some embodiments, the electrode assembly further includes: multiple second electrode plates with a polarity opposite to that of the first electrode plate, and the multiple second electrode plates and the multiple laminated segments are alternately laminated along a thickness direction of the laminated segments. Thus, during the bending of the electrode assembly, there is no need to bend the second electrode plates, reducing the number of layers to be bent and reducing the difficulty in bending the electrode assembly.

In some embodiments, the first electrode plate includes multiple bending segments, where two bending segments at two ends of the same laminated segment have opposite bending directions. By bending in different directions, a laminated electrode assembly is formed, and the structure is simple and easy to achieve.

According to a third aspect, a battery cell is provided, including: the electrode assembly according to the second aspect.

According to a fourth aspect, a battery is provided, including multiple battery cells, where the battery cell includes the electrode assembly according to the second aspect.

According to a fifth aspect, an electric device is provided, including: the battery cell according to the third aspect, or the battery according to the fourth aspect, where the battery cell or the battery is configured to provide electrical energy to the electric device.

In some embodiments, the electric device is a vehicle, a ship, or a spacecraft.

According to a sixth aspect, a method for manufacturing electrode assembly is provided, including: providing a first electrode plate, where the first electrode plate includes a laminated segment and a bending segment, the bending segment is connected to the laminated segment, and a region of the laminated segment close to the bending segment is provided with a reinforcing structure; and bending the first electrode plate at the bending segment.

Therefore, according to the method for manufacturing electrode assembly according to this embodiment of this application, during the process of bending the first electrode plate to form the electrode assembly, the bending position of the first electrode plate can be restricted through the reinforcing structure provided on the first electrode plate, allowing the first electrode plate to be bent at the bending segment, reducing bending misalignment of the first electrode plate, also reducing wrinkles in a region of the laminated segment close to the bending segment, and improving the processing precision of the electrode assembly, thereby improving the processing yield and performance of the electrode assembly, for example, reducing lithium precipitation caused by misalignment or wrinkles of the first electrode plate, thereby improving the reliability of the electrode assembly.

In some embodiments, the method includes: stamping the laminated segment along a thickness direction of the laminated segment to form a protrusion structure on a surface of the laminated segment, where the reinforcing structure includes the protrusion structure; and pressing the laminated segment. The reinforcing structure formed by stamping can be used to restrict the bending position of the first electrode plate during bending of the first electrode plate, allowing the first electrode plate to be bent at the bending segment, reducing bending misalignment of the first electrode plate and also reducing wrinkles in the region of the laminated segment close to the bending segment. For the formed electrode assembly, a size of the pressed reinforcing structure protruding from other regions of the laminated segment is reduced, or the pressed reinforcing structure may even be substantially flush with other regions of the laminated segment, reducing a distance between the first electrode plate and the second electrode plate, thereby shortening an ion transport path, and improving the performance of the electrode assembly.

In some embodiments, the pressing the laminated segment includes: pressing the laminated segment by hot pressing. Due to the hot pressing process, the originally protruding reinforcing structure is flattened, reducing the size of the reinforcing structure protruding from other regions of the laminated segment, or even making the reinforcing structure substantially flush with other regions of the laminated segment. Additionally, the hot pressing process can further reduce the distance between the first electrode plate and the second electrode plate, shortening the ion transport path, and increasing the space utilization rate of the electrode assembly within the battery cell, thereby increasing the energy density of the battery cell.

### BRIEF DESCRIPTION OF DRAWINGS

FIG. 1 is a schematic structural diagram of a vehicle disclosed in an embodiment of this application;
FIG. 2 is a schematic structural exploded view of a battery disclosed in an embodiment of this application;
FIG. 3 is a schematic structural diagram of multiple battery cells included in a battery disclosed in an embodiment of this application;
FIG. 4 is a schematic structural diagram of a battery cell disclosed in an embodiment of this application;
FIG. 5 is a schematic structural exploded view of a battery cell disclosed in an embodiment of this application;
FIG. 6 is a schematic structural diagram of a first electrode plate disclosed in an embodiment of this application;
FIG. 7 is an enlarged view of a partial structure of a first electrode plate disclosed in an embodiment of this application;
FIG. 8 is a schematic partial cross-sectional view of a first electrode plate disclosed in an embodiment of this application;
FIG. 9 is a schematic partial cross-sectional view of another first electrode plate disclosed in an embodiment of this application;
FIG. 10 is a schematic structural diagram of a first electrode plate disclosed in another embodiment of this application;
FIG. 11 is a schematic structural diagram of a first electrode plate disclosed in still another embodiment of this application;
FIG. 12 is a schematic structural diagram of a first electrode plate disclosed in yet another embodiment of this application;
FIG. 13 is an enlarged view of a partial structure of a first electrode plate disclosed in still yet another embodiment of this application;
FIG. 14 is a schematic diagram of a partial structure of a first electrode plate disclosed in a further embodiment of this application;
FIG. 15 is a schematic structural diagram of an electrode assembly disclosed in an embodiment of this application;
FIG. 16 is a schematic side view of an electrode assembly disclosed in an embodiment of this application;
FIG. 17 is a schematic structural diagram of another electrode assembly disclosed in an embodiment of this application;
FIG. 18 is a schematic side view of another electrode assembly disclosed in an embodiment of this application; and
FIG. 19 is a schematic flowchart of a method for manufacturing electrode assembly disclosed in an embodiment of this application.

In the drawings, the drawings are not drawn to actual scale.

### DESCRIPTION OF EMBODIMENTS

Implementations of this application are further described in detail below with reference to the drawings and embodiments. The detailed descriptions and drawings of the following embodiments are used to exemplarily illustrate the principles of this application but are not intended to limit the scope of this application, that is, this application is not limited to the described embodiments.

In the description of this application, it should be noted that, unless otherwise specified, "multiple" means two or more; and orientations or positional relationships indicated by the terms "upper", "lower", "left", "right", "inner", "outer", and the like are only for the convenience of describing this application and simplifying the description, and do not indicate or imply that the referenced apparatuses or elements must have a specific orientation or be constructed or operated in a specific orientation, and thus should not be construed as limiting this application. Additionally, the terms "first", "second", "third", and the like are used for descriptive purposes only and should not be construed as indicating or implying relative importance. "Perpendicular" is not strictly perpendicular but within an allowable error range. "Parallel" is not strictly parallel but within an allowable error range.

The directional terms appearing in the following description all refer to the directions shown in the drawings and do not limit the specific structure of this application. In the description of this application, it should also be noted that, unless otherwise explicitly specified and limited, the terms "mounting", "connection", and "join" should be understood in a broad sense, for example, it may be a fixed connection, a detachable connection, or an integral connection; and it may be a direct connection or an indirect connection through an intermediate medium. For those skilled in the art, the specific meanings of the above terms in this application can be understood based on specific circumstances.

In the embodiments of this application, the same reference signs denote the same components, and for brevity, detailed descriptions of the same components are omitted in different embodiments. It should be understood that the thickness, length, width, and other dimensions of various components in the embodiments of this application shown in the drawings, as well as the overall thickness, length, width, and other dimensions of an integrated apparatus, are for illustrative purposes only and should not constitute any limitation to this application.

In the embodiments of this application, the battery cell may be a secondary battery, and the secondary battery refers to a battery cell that can be recharged to activate the active material for continued use after discharge.

The battery cell may be a lithium-ion battery, sodium-ion battery, sodium-lithium-ion battery, lithium metal battery, sodium metal battery, lithium-sulfur battery, magnesium-ion battery, nickel-hydrogen battery, nickelcadmium battery, lead-acid battery, or the like, which is not limited in the embodiments of this application.

In some implementations, the battery cell in the embodiments of this application may be a metal battery. Specifically, the metal battery may include a lithium metal secondary battery, a sodium metal battery, a magnesium metal battery, or the like, which is not limited in the embodiments of this application.

A battery cell generally includes an electrode assembly. The electrode assembly includes a positive electrode, a negative electrode, and a separator. During charging and discharging of the battery cell, active ions (for example, lithium ions) intercalate and deintercalate back and forth between the positive electrode and the negative electrode. The separator is disposed between the positive electrode and the negative electrode to prevent short-circuiting between the positive and negative electrodes while allowing active ions to pass through.

In some embodiments, the positive electrode may be a positive electrode plate, and the positive electrode plate may include a positive electrode current collector and a positive electrode active material disposed on at least one surface of the positive electrode current collector.

As an example, the positive electrode current collector has two opposite surfaces in its thickness direction, and the positive electrode active material is disposed on either or both of the two opposite surfaces of the positive electrode current collector.

As an example, the positive electrode current collector may be a metal foil or a composite current collector. For example, as a metal foil, the positive electrode current collector may be made of aluminum or stainless steel with surface treated with silver, stainless steel, copper, aluminum, nickel, carbon electrode, carbon, nickel, titanium, or the like. The composite current collector may include a polymer material substrate and a metal layer. The composite current collector may be formed by forming a metal material (aluminum, aluminum alloy, nickel, nickel alloy, titanium, titanium alloy, silver, silver alloy, or the like) on a polymer material substrate (for example, a substrate of polypropylene, polyethylene terephthalate, polybutylene terephthalate, polystyrene, or polyethylene).

As an example, the positive electrode active material may include at least one of the following materials: lithium-containing phosphate, lithium transition metal oxide, and respective modified compounds thereof. However, this application is not limited to these materials, and other conventional materials that can be used as positive electrode active materials for batteries may also be used. Only one of these positive electrode active materials may be used alone, or two or more of them are used in combination. Examples of the lithium-containing phosphate may include, but are not limited to, at least one of lithium iron phosphate (for example, LiFePO₄ (also referred to as LFP)), a composite material of lithium iron phosphate and carbon, lithium manganese phosphate (for example, LiMnPO₄), a composite material of lithium manganese phosphate and carbon, lithium manganese iron phosphate, and a composite material of lithium manganese iron phosphate and carbon.

In some embodiments, the negative electrode may be a negative electrode plate, and the negative electrode plate may include a negative electrode current collector. As an example, the positive electrode active material may include at least one of a sodium transition metal oxide, a polyanionic compound, and a Prussian blue compound.

In some embodiments, the chemical formula of the sodium transition metal oxide may satisfy NaₓMO₂, where M includes one or more of Ti, V, Mn, Co, Ni, Fe, Zn, V, Zr, Ce, Cr, and Cu, and 0 < x ≤ 1.

As an example, x in NaₓMO₂ may be 0.1, 0.2, 0.3, 0.4, 0.5, 0.6, 0.7, 0.8, 0.9, or 1.

In some embodiments, the sodium transition metal oxide may be a doped modified sodium transition metal oxide, and the doping modification of the sodium transition metal oxide may include at least one of sodium site doping modification, oxygen site doping modification, transition metal site doping modification, and surface coating modification.

In some embodiments, the positive electrode may be a foamed metal. The foamed metal may be foamed nickel, foamed copper, foamed aluminum, foamed alloy, foamed carbon, or the like. When a foamed metal is used as the positive electrode, a surface of the foamed metal may not be provided with a positive electrode active material, or it may be provided with a positive electrode active material. As an example, the foamed metal may also be filled or/and deposited with a lithium source material, potassium metal, or sodium metal, where the lithium source material is a lithium metal and/or lithium-rich material.

In some embodiments, the negative electrode may be a negative electrode plate, and the negative electrode plate may include a negative electrode current collector.

As an example, the negative electrode current collector may be a metal foil, foamed metal, or composite current collector. For example, as a metal foil, the negative electrode current collector may be made of aluminum or stainless steel with surface treated with silver, stainless steel, copper, aluminum, nickel, carbon electrode, carbon, nickel, titanium or the like. The composite current collector may include a polymer material substrate and a metal layer. The foamed metal may be foamed nickel, foamed copper, foamed aluminum, foamed alloy, foamed carbon, or the like. The composite current collector may be formed by forming a metal material (copper, copper alloy, nickel, nickel alloy, titanium, titanium alloy, silver, silver alloy, or the like) on a polymer material substrate (for example, a substrate of polypropylene, polyethylene terephthalate, polybutylene terephthalate, polystyrene, or polyethylene).

In some implementations, the battery cell in the embodiments of this application may be an anode-free sodium secondary battery.

An anode-free sodium secondary battery refers to a battery constructed without actively providing a negative electrode active material layer on a negative electrode side during the manufacturing of the battery, for example, the negative electrode is not provided with a sodium metal or carbonaceous active material layer through processes such as coating or depositing to form a negative electrode active material layer during manufacturing of the battery. During the first charge, sodium ions gain electrons at an anode side and deposit as sodium metal on a surface of the current collector to form a sodium metal phase. During discharge, the sodium metal can be transformed into sodium ions and return to the positive electrode, enabling cyclic charging and discharging. Compared to other sodium secondary batteries, anode-free sodium secondary batteries can achieve higher energy density due to the absence of a negative electrode active material layer.

In some implementations, to improve battery performance, a negative electrode side of an anode-free sodium secondary battery may be provided with some functional coatings, such as carbonaceous materials, metal oxides, and alloys, to enhance the conductivity of the negative electrode current collector and improve the uniformity of sodium metal deposition.

In some implementations, a CB value of an anode-free sodium secondary battery is less than or equal to 0.1.

Specifically, the CB value is a capacity per unit area of the negative electrode plate divided by a capacity per unit area of the positive electrode plate in the secondary battery. Since an anode-free battery contains no or only a small quantity of functional coatings, the capacity per unit area of the negative electrode plate is small, and the CB value of the secondary battery is less than or equal to 0.1.

In some embodiments, the negative electrode plate may further include a negative electrode current collector and a negative electrode active material disposed on at least one surface of the negative electrode current collector.

As an example, the negative electrode current collector has two opposite surfaces in its thickness direction, and the negative electrode active material is disposed on either or both of the two opposite surfaces of the negative electrode current collector.

As an example, the negative electrode active material may include any negative electrode active materials that are well known in the art and used for battery cells. As an example, the negative electrode active material may include at least one of the following materials: artificial graphite, natural graphite, soft carbon, hard carbon, a silicon-based material, a tin-based material, lithium titanate, and the like.

In some embodiments, the negative electrode may be a foamed metal. The foamed metal may be foamed nickel, foamed copper, foamed aluminum, foamed alloy, foamed carbon, or the like. When foamed metal is used as the negative electrode plate, a surface of the foamed metal may not be provided with a negative electrode active material, or it may be provided with a negative electrode active material.

As an example, the negative electrode current collector may also be filled or/and deposited with a lithium source material, potassium metal, or sodium metal, where the lithium source material is a lithium metal and/or lithium-rich material.

In some embodiments, a material of the positive electrode current collector may be aluminum, and a material of the negative electrode current collector may be copper.

In some implementations, the electrode assembly further includes a separator, where the separator is disposed between the positive electrode and the negative electrode.

In some implementations, the separator is a separating film. This application imposes no particular limit on a type of the separating film, and any well-known porous separating film with good chemical and mechanical stability may be used.

As an example, a main material of the separating film may be selected from at least one of glass fiber, non-woven fabric, polyethylene, polypropylene, polyvinylidene fluoride, and ceramics.

In some implementations, the separator is a solid-state electrolyte. The solid-state electrolyte is disposed between the positive electrode and the negative electrode, simultaneously serving to transport ions and isolate the positive and negative electrodes.

In some implementations, the battery cell further includes an electrolyte, where the electrolyte transports ions between the positive and negative electrodes. This application imposes no specific limit on a type of electrolyte, which may be selected based on requirements. The electrolyte may be liquid, gel, or solid.

In some implementations, the electrode assembly is a wound structure. The positive electrode plate and the negative electrode plate are wound into a wound structure.

In some implementations, the electrode assembly is a laminated structure.

As an example, multiple positive electrode plates and multiple negative electrode plates may be provided, respectively, with the multiple positive electrode plates and the multiple negative electrode plates being alternately laminated.

As an example, multiple positive electrode plates may be provided, and the negative electrode plate may be folded to form multiple laminated folded segments, with one positive electrode plate being clamped between adjacent folded segments.

As an example, the positive electrode plate and the negative electrode plate are each folded to form multiple laminated folded segments.

As an example, multiple separators may be provided, respectively disposed between any adjacent positive electrode plates or negative electrode plates.

As an example, the separators may be consecutively disposed, arranged between any adjacent positive electrode plates or negative electrode plates by folding or winding.

In some implementations, the electrode assembly may be in a cylindrical shape, a flat shape, a prismatic shape, or the like.

In some implementations, the electrode assembly is provided with tabs, where the tabs can lead current out of the electrode assembly. The tabs include a positive tab and a negative tab.

In some implementations, the battery cell may include a housing. The housing is configured to encapsulate components such as the electrode assembly and the electrolyte. The housing may be a steel housing, aluminum housing, plastic housing (for example, polypropylene), composite metal housing (for example, copper-aluminum composite housing), aluminum-plastic film, or the like. The housing includes a shell and a cover plate.

As an example, the battery cell may be a cylindrical battery cell, a prismatic battery cell, a pouch battery cell, or a battery cell of other shapes. Prismatic battery cells include square-shell battery cells, blade-shaped battery cells, and multi-prismatic batteries. The multi-prismatic batteries are, for example, hexagonal prismatic batteries. This is not particularly limited in this application.

The battery mentioned in the embodiments of this application may include one or more battery cells to provide a single physical module with higher voltage and capacity. When there are multiple battery cells, the multiple battery cells are connected in series, parallel, or series-parallel through a busbar component.

In some embodiments, the battery may be a battery module. When there are multiple battery cells, the multiple battery cells are arranged and fixed to form a battery module.

In some embodiments, the battery may be a battery pack, where the battery pack includes a box and a battery cell, and the battery cell or battery module is accommodated in the box.

In some embodiments, the box may serve as a part of a chassis structure of a vehicle. For example, a portion of the box may form at least a part of the floor of a vehicle, or a portion of the box may form at least a part of a crossbeam and a longitudinal beam of a vehicle.

In the embodiments of this application, the battery cell includes an electrode assembly inside. During a process of forming the electrode assembly by laminating or winding the electrode plate, it may be necessary to bend the electrode plate. However, since the electrode plate is typically thin, it is difficult to precisely control a specific bending region of the electrode plate. Consequently, during bending of the electrode plate, a bent position is not bent according to predetermined dimensions, potentially leading to misalignment of the electrode plate, such as electrode plate misalignment or wrinkles. This affects the processing yield of the electrode assembly and may also affect the use performance of the electrode assembly, for example, making the electrode plate prone to lithium precipitation and consequently causing safety incidents.

Therefore, an embodiment of this application provides an electrode plate, an electrode assembly, a battery cell, a battery, an electric device, and a method for manufacturing electrode assembly to address the above issues. The electrode plate of this embodiment of this application includes a laminated segment and a bending segment connected to each other, where the bending segment is configured for bending, that is, the electrode plate can be bent at the bending segment. A region of the laminated segment close to the bending segment is provided with a reinforcing structure, which can increase the strength of the region of the laminated segment close to the bending segment. Due to the high strength of the region of the laminated segment close to the bending segment, the position of the bending segment can be located through the reinforcing structure. During a process of bending the electrode plate to form an electrode assembly, a bending position of the electrode plate can be restricted, so that the electrode plate is bent at the bending segment, reducing bending misalignment of the electrode plate, also reducing wrinkles in the region of the laminated segment close to the bending segment, and improving the processing precision of the electrode assembly, thereby improving the processing yield and performance of the electrode assembly, for example, reducing lithium precipitation caused by electrode plate misalignment or wrinkles, thereby improving the reliability of the electrode assembly.

The technical solutions described in this embodiment of this application are all applicable to various electric devices using batteries.

The electric device may be a vehicle, a mobile phone, a portable device, a laptop computer, a ship, a spacecraft, an electric toy, an electric tool, or the like. The vehicle may be a fuel vehicle, a gas vehicle, or a new energy vehicle, and the new energy vehicle may be a battery electric vehicle, a hybrid vehicle, or a range-extended vehicle; the spacecraft includes an airplane, a rocket, a space shuttle, a spaceship, or the like; the electric toy includes a fixed or mobile electric toy, such as a game console, an electric toy car, an electric toy ship, an electric toy airplane, or the like; the electric tool includes an electric metal cutting tool, an electric grinding tool, an electric assembly tool, and an electric railway tool, such as an electric drill, an electric grinder, an electric wrench, an electric screwdriver, an electric hammer, an impact drill, a concrete vibrator, and an electric planer. The above electric devices are not particularly limited in this embodiment of this application.

For ease of description, an example in which the electric device is a vehicle is used for description in the following embodiments.

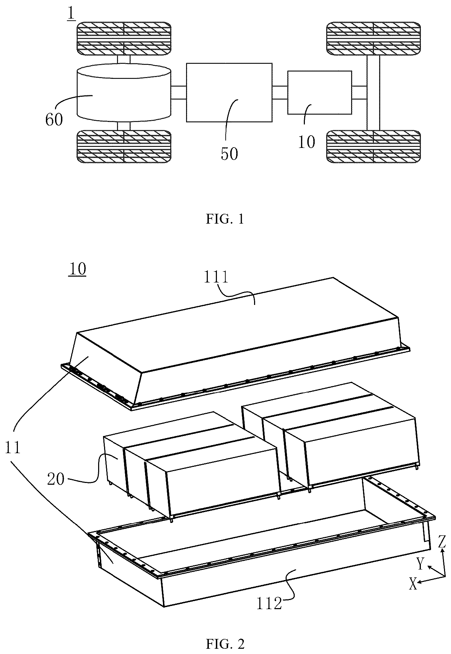

For example, as shown in FIG. 1 which is a schematic structural diagram of a vehicle 1 according to an embodiment of this application, the vehicle 1 may be a fuel vehicle, a gas vehicle, or a new energy vehicle, and the new energy vehicle may be a battery electric vehicle, a hybrid vehicle, or a range-extended vehicle. The vehicle 1 may be provided with a motor 60, a controller 50, and a battery 10, where the controller 50 is configured to control the battery 10 to supply power to the motor 60. For example, the battery 10 may be disposed at the bottom, front, or rear of the vehicle 1. The battery 10 may be configured to supply power to the vehicle 1. For example, the battery 10 may serve as an operating power source for the vehicle 1, used for a circuit system of the vehicle 1, such as for starting, navigation, and operational power demands during driving of the vehicle 1. In another embodiment of this application, the battery 10 may serve not only as an operating power source for the vehicle 1 but also as a driving power source of the vehicle 1, replacing or partially replacing fuel or natural gas to provide driving power for the vehicle 1.

To meet different power use demands, the battery may include multiple battery cells, where the multiple battery cells may be connected in series, parallel, or series-parallel, and being connected in series-parallel refers to a combination of a series connection and a parallel connection. The battery may also be referred to as a battery pack. Optionally, multiple battery cells may first be connected in series, parallel, or series-parallel to form a battery module, and then multiple battery modules may be connected in series, parallel, or series-parallel to form the battery. That is, multiple battery cells may directly form a battery, or they may first form battery modules, and then the battery modules form a battery.

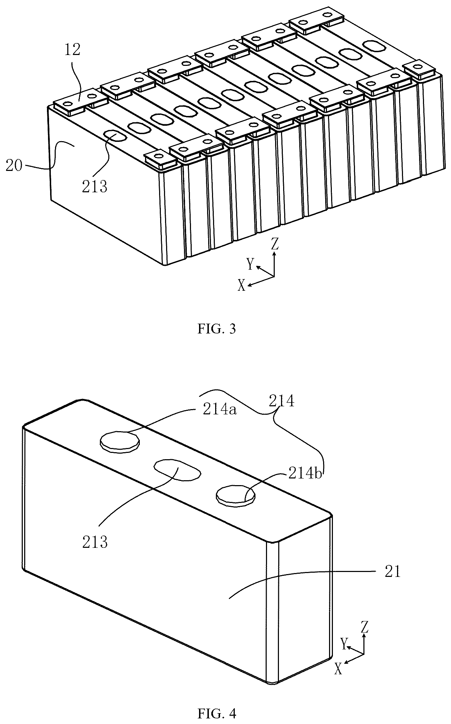

For example, FIG. 2 shows a schematic structural diagram of a battery 10 according to an embodiment of this application. The battery 10 may include multiple battery cells 20. FIG. 3 shows a schematic diagram of multiple battery cells 20 included in the battery 10. As shown in FIG. 2 and FIG. 3, the battery 10 may further include a box 11, the interior of the box 11 is a hollow structure, and the multiple battery cells 20 are accommodated within the box 11. FIG. 2 shows a possible implementation of the box 11 according to an embodiment of this application. As shown in FIG. 2, the box 11 may include two parts, which are respectively referred to herein as a first part 111 and a second part 112, where the first part 111 and the second part 112 are fastened together. The shapes of the first part 111 and the second part 112 may be determined based on a shape of combined battery modules 200, with at least one of the first part 111 and the second part 112 having an opening. For example, as shown in FIG. 2, the first part 111 and the second part 112 may each be a hollow cuboid with only one surface being an open surface, the opening of the first part 111 and the opening of the second part 112 are disposed opposite each other, and the first part 111 and the second part 112 are fastened together to form a box 11 with a closed chamber.

For another example, unlike what is shown in FIG. 2, only one of the first part 111 and the second part 112 may be a hollow cuboid with an opening, while the other is plate-shaped to cover the opening. For example, an example in which the second part 112 is a hollow cuboid with only one surface being an open surface and the first part 111 is plate-shaped is used, where the first part 111 covers the opening of the second part 112 to form a box 11 with a closed chamber, and the closed chamber may be used for accommodating multiple battery cells 20. The multiple battery cells 20 are connected in parallel, series, or series-parallel and then placed in the box 11 formed by fastening the first part 111 and the second part 112.

Optionally, the battery 10 may further include other structures, which are not described in detail herein. For example, as shown in FIG. 2 and FIG. 3, the battery 10 may further include a busbar component 12, and the busbar component 12 is configured to achieve electrical connection between multiple battery cells 20, such as parallel connection, series connection, or series-parallel connection. Specifically, the busbar component 12 may achieve the electrical connection between the battery cells 20 by connecting electrode terminals 214 of the battery cells 20. Further, the busbar component 12 may be fixed to the electrode terminals 214 of the battery cells 20 by welding. The electrical energy of the multiple battery cells 20 may be further led out by a conductive mechanism via the box 11.

Depending on different power demands, the number of the battery cells 20 in the battery 10 may be set to any value. The multiple battery cells 20 may be connected in series, parallel, or series-parallel to achieve larger capacity or power. Since the number of the battery cells 20 included in each battery 10 may be large, to facilitate installation, the battery cells 20 may be grouped, with each group of battery cells 20 forming a battery module. The number of the battery cells 20 included in a battery module is not limited and can be set according to requirements.

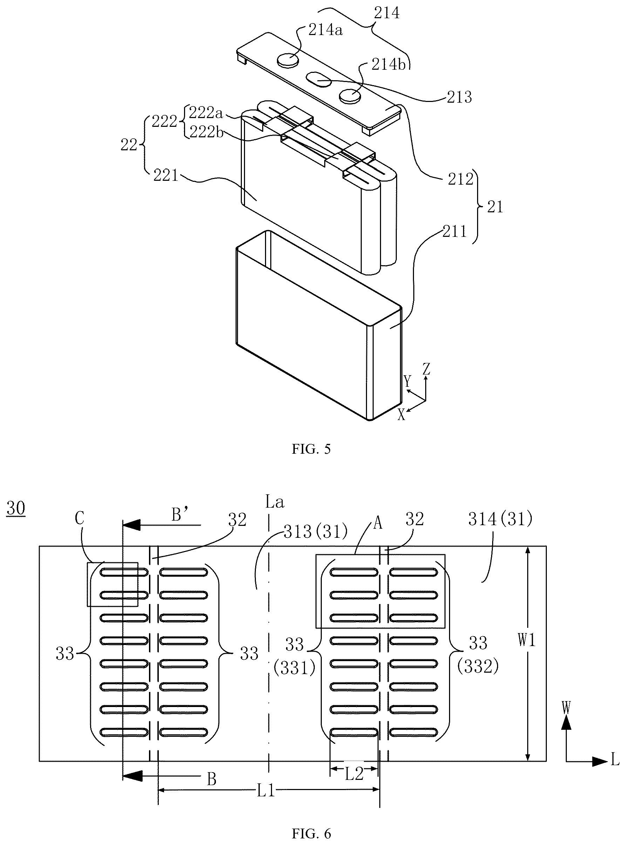

FIG. 4 is a schematic structural diagram of a battery cell 20 according to an embodiment of this application, and FIG. 5 is a schematic exploded view of a partial structure of a battery cell 20 according to an embodiment of this application. For example, the battery cell 20 shown in FIG. 5 may be any battery cell 20 in FIG. 2 to FIG. 4. As shown in FIG. 4 and FIG. 5, for ease of description, a rectangular battery cell 20 is taken as an example, where a direction Z in the figures represents a height direction of the battery cell 20, a direction X in the figures represents a width direction or thickness direction of the battery cell 20, a direction Y in the figures represents a length direction of the battery cell 20, and the height direction Z, width direction Z, and length direction Y of the battery cell 20 are perpendicular to each other.

As shown in FIG. 4 and FIG. 5, the battery cell 20 in this embodiment of this application may include: a housing 21. Specifically, the housing 21 may include: a shell 211, the shell 211 being a hollow structure with at least one opening; a cover plate 212 configured to cover the opening of the shell; and an electrode assembly 22 accommodated within the housing 21.

It should be understood that the shell 211 in this embodiment of this application is a component for accommodating the electrode assembly 22, and the shell 211 may be a hollow structure with an opening at one or multiple ends. For example, if the shell 211 is a hollow structure with an opening at one end, one cover plate 212 may be provided; and if the shell 211 is a hollow structure with openings at two opposite ends, two cover plates 212 may be provided, where the two cover plates 212 respectively cover the openings at the two ends of the shell 211.

The shell 211 may have various shapes, such as a cylinder, a cuboid, or other polyhedrons. For example, as shown in FIG. 4 and FIG. 5, in this embodiment of this application, the shell 211 being a cuboid structure and the shell 211 being a hollow structure with an opening at one end is used as an example for description.

It should be understood that the cover plate 212 in this embodiment of this application is configured to cover the opening of the shell 211 to isolate the internal environment of the battery cell 20 from the external environment. The shape of the cover plate 212 may be adapted to the shape of the shell 211. As shown in FIG. 4 and FIG. 5, the shell 211 is a cuboid structure, and the cover plate 212 is a rectangular plate structure adapted to the shell 211.

In this embodiment of this application, the shell 211 may be made of various materials, such as copper, iron, aluminum, steel, or aluminum alloy. The cover plate 212 may also be made of various materials, such as copper, iron, aluminum, steel, or aluminum alloy. Optionally, the cover plate 212 and the shell 211 may be made of the same material or different materials.

It should be understood that the battery cell 20 further includes an electrode terminal 214. The electrode terminal 214 in this embodiment of this application is configured to be electrically connected to the electrode assembly 22 inside the battery cell 20 to output the electrical energy of the battery cell 20. As shown in FIG. 4 and FIG. 5, the battery cell 20 may include at least two electrode terminals 214, and the at least two electrode terminals 214 may include at least one positive electrode terminal 214a and at least one negative electrode terminal 214b. The positive electrode terminal 214a is configured to be electrically connected to a positive tab 222a of the electrode assembly 22, and the negative electrode terminal 214b is configured to be electrically connected to a negative tab 222b of the electrode assembly 22. The positive electrode terminal 214a may be directly or indirectly connected to the positive tab 222a, and the negative electrode terminal 214b may be directly or indirectly connected to the negative tab 222b. For example, the positive electrode terminal 214a may be electrically connected to the positive tab 222a through a connecting member, and the negative electrode terminal 214b may be electrically connected to the negative tab 222b through a connecting member.

In the battery cell 20, the electrode assembly 22 is a component in a battery cell 20 where electrochemical reactions take place. Depending on actual use demands, one or more electrode assemblies 22 may be disposed within the shell 211. For example, as shown in FIG. 4 and FIG. 5, two electrode assemblies 22 are disposed within the battery cell 20. The electrode assembly 22 may be cylindrical, cuboid, or the like. If the electrode assembly 22 is a cylindrical structure, the shell 211 may also be a cylindrical structure; and if the electrode assembly 22 is a cuboid structure, the shell 211 may also be a cuboid structure.

It should be understood that, as shown in FIG. 4 and FIG. 5, the electrode assembly 22 includes tabs 222 and an electrode body portion 221, where the tabs 222 of the electrode assembly 22 may include a positive tab 222a and a negative tab 222b. The positive tab 222a may be formed by laminating portions of a positive electrode plate that are not coated with a positive electrode active material layer, and the negative tab 222b may be formed by laminating portions of a negative electrode plate that are not coated with a negative electrode active material layer. The electrode body portion 221 may be formed by laminating or winding the positive electrode plate and the negative electrode plate.

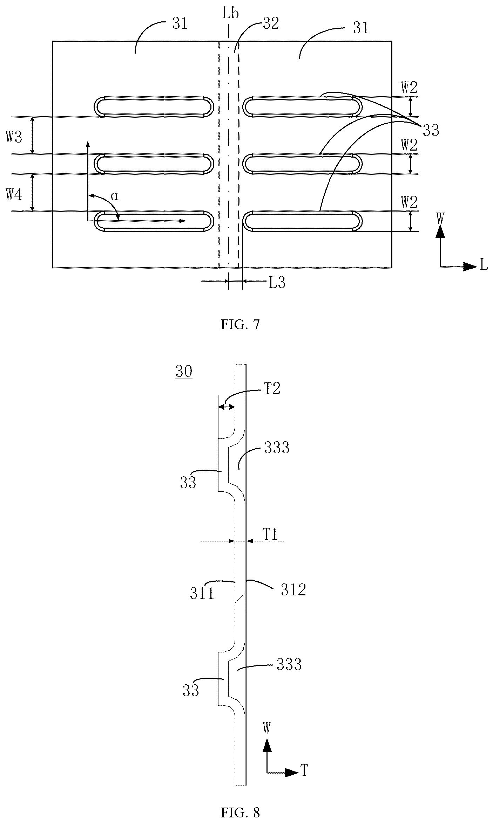

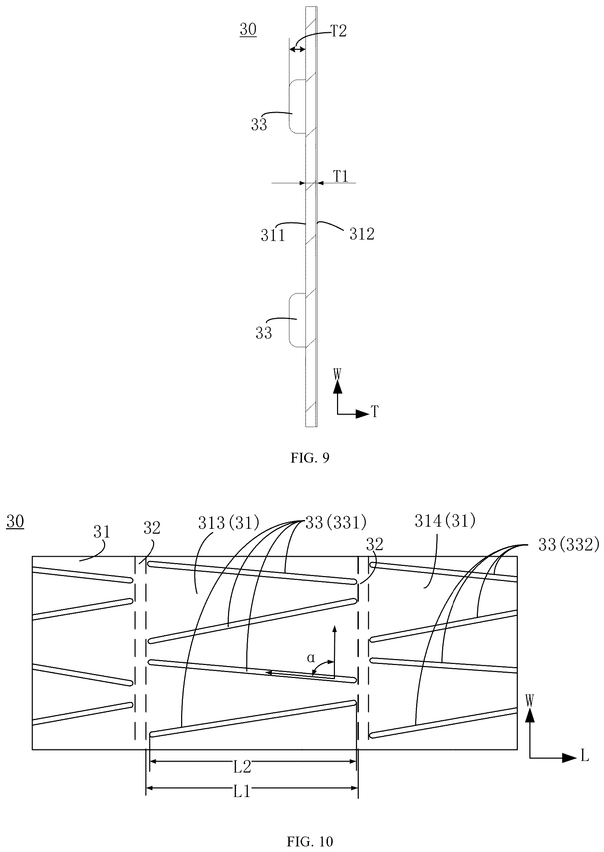

FIG. 6 shows a schematic diagram of a partial structure of an electrode plate 30 according to an embodiment of this application, and FIG. 6 shows the electrode plate 30 in an unfolded state. For example, FIG. 6 may show a state before the electrode plate 30 is wound or laminated to form an electrode assembly 22. FIG. 7 shows a schematic enlarged view of a partial structure of the electrode plate 30 according to an embodiment of this application. For example, FIG. 7 may be an enlarged view of region A shown in FIG. 6. FIG. 8 and FIG. 9 respectively show possible schematic cross-sectional views of a local region of an electrode plate 30 according to an embodiment of this application. For example, FIG. 8 and FIG. 9 may respectively be enlarged views of possible cross-sectional views of region C of the electrode plate 30 shown in FIG. 6 along a B-B' direction.

As shown in FIG. 6 to FIG. 9, the electrode plate 30 according to this embodiment of this application includes: a laminated segment 31 and a bending segment 32, the bending segment 32 is connected to the laminated segment 31, and the bending segment 32 is configured for bending, where a region of the laminated segment 31 close to the bending segment 32 is provided with a reinforcing structure 33.

The electrode plate 30 of this embodiment of this application may be any electrode plate for forming the electrode assembly 22, for example, the electrode plate 30 may be a positive electrode plate or a negative electrode plate. For easy distinction, the electrode plate 30 is referred to hereinafter as a first electrode plate 30, that is, the first electrode plate 30 may be any electrode plate included in the electrode assembly 22.

The first electrode plate 30 of this embodiment of this application includes interconnected laminated segments 31 and a bending segment 32. During a process of assembling the first electrode plate 30 to form the electrode assembly 22, the first electrode plate 30 may be bent at the bending segment 32, allowing multiple laminated segments 31 to be laminated or wound to form the electrode assembly 22. For ease of description, a state in which the first electrode plate 30 is not bent to form the electrode assembly 22 is used as an example for description in this embodiment of this application.

In this embodiment of this application, a region of the laminated segment 31 of the first electrode plate 30 close to the bending segment 32 is provided with a reinforcing structure 33, which can enhance the structural strength of the region of the laminated segment 31 close to the bending segment 32. Due to the high strength of the region of the laminated segment 31 close to the bending segment 32, the position of the bending segment 32 can be located through the reinforcing structure 33. During a process of bending the first electrode plate 30 to form the electrode assembly 22, a bending position of the first electrode plate 30 may be restricted, allowing the first electrode plate 30 to be bent at the bending segment 32, reducing bending misalignment of the first electrode plate 30, also reducing wrinkles in the region of the laminated segment 31 close to the bending segment 32, and improving the processing precision of the electrode assembly 22, thereby improving the processing yield and performance of the electrode assembly 22, for example, reducing lithium precipitation caused by misalignment or wrinkles of the first electrode plate 30, thereby improving the reliability of the electrode assembly 22.

It should be understood that the reinforcing structure 33 in this embodiment of this application can be implemented in various ways.

In some embodiments, the reinforcing structure 33 may be implemented by using different materials. To be specific, the material of a region of the laminated segment 31 where the reinforcing structure 33 is located is different from the material of other regions of the laminated segment 31, thereby enhancing the structural strength of the reinforcing structure 33.

In some embodiments, the reinforcing structure 33 includes a protrusion structure protruding from a surface of the laminated segment 31. The reinforcing structure 33 is implemented through the protrusion structure provided, which is easier to achieve. In addition, a formation method of the protrusion structure can be configured based on practical applications to facilitate processing.

For example, the protrusion structure protrudes relative to a first surface 311 of the laminated segment 31 and is recessed relative to a second surface 312 of the laminated segment 31, where the first surface 311 and the second surface 312 are disposed opposite each other. Such a protrusion structure is simple to process and easy to achieve, without requiring an additional structure, thereby avoiding excessive weight increase of the first electrode plate 30. As shown in FIG. 8, the region of the laminated segment 31 of the first electrode plate 31 close to the bending segment 32 may be processed through stamping, rolling, or the like to form a protrusion structure as the reinforcing structure 33, such that the protrusion structure protrudes relative to the first surface 311 of the laminated segment 31 and is recessed relative to the second surface 312 opposite the first surface 311, that is, the reinforcing structure 33 forms a groove structure 333 on the second surface 312 of the laminated segment 31.

It should be understood that the protrusion structure protruding relative to the first surface 311 means that the protrusion structure protrudes relative to other regions of the first surface 311 than the reinforcing structure 33. Correspondingly, the protrusion structure being recessed relative to the second surface 312 means that the protrusion structure is recessed relative to other regions of the second surface 312 than the reinforcing structure 33. Since the first electrode plate 30 is typically a thin sheet-like structure, the first surface 311 and second surface 312 disposed opposite each other in these embodiments of this application are surfaces perpendicular to a thickness direction T of the first electrode plate 30, that are, surfaces perpendicular to the thickness direction T of the laminated segment 31.

For another example, the protrusion structure includes a reinforcing sheet disposed on the surface of the laminated segment 31. Specifically, the reinforcing sheet may be disposed on at least one surface of the laminated segment 31. For example, as shown in FIG. 9, the reinforcing sheet may be disposed on the first surface 311 of the laminated segment 31. An appropriate material is selected to process the reinforcing sheet based on actual needs, to correspondingly obtain a reinforcing structure 33 with specific strength, offering a more flexible and effective implementation. For example, the material of the reinforcing sheet may be selected based on practical applications. For example, the material of the reinforcing sheet includes, but is not limited to, at least one of the following: polymer plastic, non-woven fabric, carbon fiber, and cardboard. In some embodiments, the reinforcing sheet may be fixed to the laminated segment 31 by adhesion, or may be fixed by other methods such as welding.

As shown in FIG. 6 to FIG. 9, regardless of the method used to implement the protrusion structure, a protrusion height T2 of the protrusion structure relative to the laminated segment 31 in these embodiments of this application can be flexibly set based on practical applications. For example, an appropriate protrusion height T2 may be correspondingly set based on a thickness T1 of the laminated segment 31. In these embodiments of this application, the thickness T1 of the laminated segment 31 is a thickness of other regions of the laminated segment 31 than the reinforcing structure 33, for example, it may specifically be an average thickness of other regions of the laminated segment 31 than the reinforcing structure 33. The protrusion height T2 of the protrusion structure relative to the laminated segment 31 in these embodiments of this application refers to a distance between a surface of the protrusion structure and the surface of the laminated segment 31. For example, in an example in which the protrusion structure protrudes from the first surface 311 of the laminated segment 31, the protrusion height T2 refers to a distance between a surface of the protrusion structure away from the first surface 311 and the first surface 311, for example, it may be a maximum distance or an average distance between the two surfaces.

For example, a ratio of the protrusion height T2 of the protrusion structure relative to the laminated segment 31 to the thickness T1 of the laminated segment 31 is within a value range of [0.3, 50], optionally [5, 40], and preferably [8, 20]. In consideration of the requirements on the energy density, performance and the like within the battery cell 20, the thickness T1 of the laminated segment 31 is within a limited value range. If the ratio of the protrusion height T2 to the thickness T1 of the laminated segment 31 is set to be too small, for example, less than 0.3, the protrusion height T2 will be too small, that is, a strength increased by the protrusion structure is also small, and the strength of the reinforcing structure 33 is slightly different from that of other regions of the laminated segment 31, making the reinforcing structure 33 likely unable to restrict and locate the bending segment 32. Conversely, if the ratio of the protrusion height T2 to the thickness T1 of the laminated segment 31 is set to be too large, for example, exceeding 50, the protrusion height T2 will be too large, which, on one hand, increases a distance between multiple electrode plate layers after the first electrode plate 30 is processed into the electrode assembly 22, thereby reducing the space utilization rate of the electrode assembly 22 within the battery cell 20 and consequently reducing the energy density of the battery cell 20; on the other hand, if the protrusion structure is formed by stamping, an excessively large height T2 of the stamped protrusion structure is likely to cause damage or even fracture of the first electrode plate 30 at the stamped position, for example, the material of the first electrode plate 30 may include graphite, and the first electrode plate 30 coated with graphite is quite prone to fracture during stamping, thereby affecting the processing efficiency and yield of the first electrode plate 30 and the electrode assembly 22.

Therefore, the ratio of the protrusion height T2 of the protrusion structure relative to the laminated segment 31 to the thickness T1 of the laminated segment 31 in these embodiments of this application should not be set to be too large or too small. For example, the ratio of the protrusion height T2 to the thickness T1 of the laminated segment 31 may be set to be greater than or equal to 0.3, further, greater than or equal to 0.5, to effectively enhance the structural strength of the reinforcing structure 33. Even further, the ratio may be greater than or equal to 8, to optimize the reinforcement effect of the reinforcing structure 33. For another example, the ratio of the protrusion height T2 to the thickness T1 of the laminated segment 31 may alternatively be set to be less than or equal to 50, further, less than or equal to 40, to reduce damage or fracture of the first electrode plate 30. Still further, the ratio is less than or equal to 20, to increase the space utilization rate of the electrode assembly 22 using the first electrode plate 30 within the battery cell 20, thereby increasing the energy density of the battery cell 20. For another example, the ratio of the protrusion height T2 to the thickness T1 of the laminated segment 31 may be set to 0.3, 0.8, 1, 3, 5, 8, 10, 13, 15, 18, 20, 23, 25, 28, 30, 33, 35, 38, 40, 43, 45, 48, or 50, but these embodiments of this application are not limited thereto.

For example, the thickness T1 of the laminated segment 31 in these embodiments of this application may be flexibly set based on practical applications. For example, the thickness T1 of the laminated segment 31 may be equal to a thickness of the bending segment 32, that is, a thickness of regions of the first electrode plate 30 other than the reinforcing structure 33 may be uniform, so the thickness T1 of the laminated segment 31 is the thickness T1 of the first electrode plate 30. For another example, the thickness T1 of the laminated segment 31 may be within a value range of6 µm, 300 µm]. For another example, the thickness T1 of the laminated segment 31 may specifically be 6 µm, 10 µm, 30 µm, 50 µm, 80 µm, 100 µm, 130 µm, 150 µm, 180 µm, 200 µm, 230 µm, 250 µm, or 300 µm.

For example, the protrusion height T2 of the protrusion structure relative to the laminated segment 31 in these embodiments of this application may be flexibly set based on practical applications. For example, the protrusion structure may be a structure with a uniform thickness, that is, protrusion heights of different regions of the protrusion structure relative to the laminated segment 31 are the same to facilitate processing. For another example, the protrusion height T2 of the protrusion structure relative to the laminated segment 31 may be within a value range of [0.1 mm, 0.8 mm], further, [0.1 mm, 0.4 mm]. For another example, the protrusion height T2 of the protrusion structure relative to the laminated segment 31 may specifically be 0.1 mm, 0.2 mm, 0.3 mm, 0.4 mm, 0.5 mm, 0.6 mm, 0.7 mm, or 0.8 mm.

It should be understood that the strength of the reinforcing structure 33 in these embodiments of this application may be set based on practical applications. For example, the strength of the reinforcing structure 33 may be represented by a stiffness value of the reinforcing structure 33.

In some embodiments, a ratio of the stiffness of the reinforcing structure 33 to a stiffness of other regions of the laminated segment 31 than the reinforcing structure 33 is within a value range of [1.5, 65], optionally [2, 40], and preferably [10, 25]. If the ratio of the stiffness of the reinforcing structure 33 to the stiffness of other regions of the laminated segment 31 is too small, for example, less than 1.5, since the stiffness of the reinforcing structure 33 is greater than that of other regions of the laminated segment 31, the strength of the reinforcing structure 33 is slightly different from the strength of other regions of the laminated segment 31, so that the reinforcing structure 33 is likely unable to restrict and locate the bending segment 32. Conversely, if the ratio of the stiffness of the reinforcing structure 33 to the stiffness of other regions of the laminated segment 31 is too large, for example, greater than 65, due to structural and material limitations of the laminated segment 31, excessively high requirements are imposed on the strength of the reinforcing structure 33, increasing the difficulty in processing and material selection and also increasing costs.

Therefore, the ratio of the stiffness of the reinforcing structure 33 to the stiffness of other regions of the laminated segment 31 in these embodiments of this application should not be too large or too small. For example, the ratio of their stiffnesses may be set to be greater than or equal to 1.5, further, greater than or equal to 2, to enhance the strength of the reinforcing structure 33. Even further, the ratio is greater than or equal to 10, to ensure that the strength of the reinforcing structure 33 meets design requirements. For another example, the ratio of their stiffnesses may alternatively be set to be less than or equal to 65, further, less than or equal to 40, to reduce the processing difficulty of the reinforcing structure 33. Still further, the ratio is less than or equal to 25, to make the reinforcing structure 33 easier to achieve. For another example, the ratio of the stiffness of the reinforcing structure 33 to the stiffness of other regions of the laminated segment 31 may be set to 1.5, 2, 5, 8, 10, 13, 15, 18, 20, 23, 25, 28, 30, 33, 35, 38, 40, 43, 45, 48, 50, 53, 55, 58, 60, 63, or 65, but these embodiments of this application are not limited thereto.

It should be understood that the stiffness of the reinforcing structure 33 in these embodiments of this application may be flexibly set based on practical applications. For example, the stiffness of the reinforcing structure 33 is within a value range of [10 N/m, 300 N/m], preferably [50 N/m, 150 N/m]. Since the stiffness of the reinforcing structure 33 should be greater than that of other regions of the laminated segment 31, a value of the stiffness of the reinforcing structure 33 should not be too small, for example, it should typically not be less than 10 N/m, to ensure that the reinforcing structure 33 can effectively restrict and locate the bending segment 32. Conversely, if the stiffness of the reinforcing structure 33 is set to be too large, for example, greater than 300 N/m, excessively high requirements are imposed on the strength of the reinforcing structure 33, increasing the difficulty in processing and material selection of the reinforcing structure and also reducing costs.

Therefore, the stiffness of the reinforcing structure 33 should not be too large or too small. For example, the stiffness of the reinforcing structure 33 may be set to be greater than or equal to 10 N/m, further, greater than or equal to 50 N/m, to ensure that the reinforcing structure 33 can restrict and locate the bending segment 32. For another example, the stiffness of the reinforcing structure 33 may be set to be less than or equal to 300 N/m, further, less than or equal to 150 N/m, to reduce the processing difficulty and processing costs of the reinforcing structure 33. For another example, the stiffness of the reinforcing structure 33 may be specifically set to 10 N/m, 30 N/m, 50 N/m, 80 N/m, 100 N/m, 130 N/m, 150 N/m, 180 N/m, 200 N/m, 230 N/m, 250 N/m, 280 N/m, or 300 N/m, but these embodiments of this application are not limited thereto.

It should be understood that the stiffnesses of different structures in these embodiments of this application may be obtained through experimental tests. For example, taking the stiffness of the reinforcing structure 33 as an example, it may be obtained through the following test, but these embodiments of this application are not limited thereto. First, a first electrode plate 30 of a specific size is taken to ensure that this section of the first electrode plate 30 includes at least part of a reinforcing structure 33. For example, a first electrode plate 30 with a length of approximately 30 mm may be taken, and in the width direction W, it should include the width of at least one complete reinforcing structure 33, for example, it may include only the width of one reinforcing structure 33. Next, this section of the first electrode plate 30 is fixed to a high-precision balance, such that after this section of the first electrode plate 30 is fixed, the reinforcing structure 33 included in this section extends at least 20 mm beyond the fixed position in a length direction L. For example, this section of the first electrode plate 30 may be fixed to a 2 cm × 2 cm cubic top on the high-precision balance, where except the 2 cm × 2 cm fixation region, the reinforcing structure 33 of this section of the first electrode plate 30 extends at least 20 mm in the length direction L. Then, a 1 mm steel needle is used to vertically press down the topmost end of the extended portion of the reinforcing structure 33 of the first electrode plate 30 until the topmost end is pressed down by 5 mm, and the balance reading at this time is recorded as A (N). A stiffness value of the tested reinforcing structure 33 is equal to A/deformation amount, that is, A/0.005, where the stiffness value is measured in N/m.

In these embodiments of this application, the region of the laminated segment 31 close to the bending segment 32 is provided with multiple reinforcing structures 33 arranged along a width direction W of the first electrode plate 30, which can enhance the structural strength of different regions in the width direction W of the first electrode plate 30, thereby reducing the likelihood of localized misalignment during bending of the first electrode plate 30 along the bending region 32.

It should be understood that the positions and sizes of the multiple reinforcing structures 33 arranged along the width direction W of the first electrode plate 30 in these embodiments of this application may be configured based on practical applications.

In some embodiments, the multiple reinforcing structures 33 are arranged at an equal interval along the width direction W of the first electrode plate 30. Specifically, as shown in FIG. 6 to FIG. 9, multiple reinforcing structures 33 arranged at intervals in the width direction W of the first electrode plate 30 are taken as an example. Herein, a spacing between the first reinforcing structure 33 and the second reinforcing structure 33 is denoted as W3, and a spacing between the second reinforcing structure 33 and the third reinforcing structure 33 is denoted as W4. W3 and W4 may be equal or not equal. For example, W3 may be set to be equal to W4, or the like. A distance between every two adjacent reinforcing structures 33 among the multiple reinforcing structures 33 arranged at intervals in the width direction W of the first electrode plate 30 is set to be equal to W3, to facilitate processing and to ensure a more uniform arrangement of the multiple reinforcing structures 33, thereby uniformly enhancing the structural strength of different regions in the width direction W of the first electrode plate 30.

In some embodiments, the widths of the multiple reinforcing structures 33 arranged at intervals in the width direction W of the first electrode plate 30 are equal. Specifically, as shown in FIG. 6 to FIG. 9, the width of each of the multiple reinforcing structures 33 arranged at intervals in the width direction W of the first electrode plate 30 may be set to be equal to W2, which facilitates processing on one hand and ensures more uniform arrangement and more uniform structural strength distribution of the multiple reinforcing structures 33 on the other hand.

In some embodiments, the multiple reinforcing structures 33 protrude from the surface of the laminated segment 31 in a same protrusion direction. When the multiple reinforcing structures 33 are configured to protrude from other regions of the laminated segment 31 than the reinforcing structure 33, for the electrode assembly 22 formed by the first electrode plate 30, the reinforcing structure 33 occupies space between different electrode plate layers of the electrode assembly 22. If the multiple reinforcing structures 33 arranged along the width direction W of the first electrode plate 30 are configured to protrude in a same protrusion direction, the multiple reinforcing structures 33 may occupy a same side space of the first electrode plate 30, reducing gaps between multiple layers of structures of the electrode assembly 22, thereby increasing the space utilization rate of the electrode assembly 22 within the battery cell 20 and consequently increasing the energy density of the battery cell 20.

In these embodiments of this application, the width of the reinforcing structure 33 can be flexibly set based on practical applications. For example, a ratio of a width sum of all the reinforcing structures 33 arranged along the width direction W of the first electrode plate 30 to the width W1 of the first electrode plate 30 is within a value range of [1/3, 0.8], preferably [0.4, 0.6]. Specifically, if multiple reinforcing structures 33 are arranged along the width direction W of the first electrode plate 30 and the widths of the multiple reinforcing structures 33 are equal, the width sum of all the reinforcing structures 33 arranged along the width direction W of the first electrode plate 30 is equal to a product of the width of each reinforcing structure 33 and the number of the reinforcing structures 33. For example, as shown in FIG. 6 to FIG. 9, if eight reinforcing structures 33 are arranged along the width direction W of the first electrode plate 30 and the widths of the multiple reinforcing structures 33 are all W2, the width sum of all the reinforcing structures 33 arranged along the width direction W of the first electrode plate 30 is equal to 8*W2.

If the ratio of the width sum of all the reinforcing structures 33 arranged along the width direction W of the first electrode plate 30 to the width W1 of the first electrode plate 30 in these embodiments of this application is set to be too small, for example, less than 1/3, most regions in the width direction W of the first electrode plate 30 are not provided with the reinforcing structure 33, making the first electrode plate 30 prone to misalignment in these regions during bending of the first electrode plate 30, thereby affecting the processing yield of the electrode assembly 22 and also affecting the use performance of the electrode assembly 22. Conversely, if the ratio of the width sum of all the reinforcing structures 33 arranged along the width direction W of the first electrode plate 30 to the width W1 of the first electrode plate 30 is set to be too large, for example, greater than 0.8, the reinforcing structure 33 occupies excessive regions, which may also affect the strength of these regions. Particularly when the reinforcing structure 33 is formed by stamping, excessive distribution of the reinforcing structure 33 along the width direction W of the first electrode plate 33 may cause a failure in enhancing the structural strength of a region of the laminated segment 31 close to the bending segment 32, so that misalignment still occurs during bending of the first electrode plate 30, which affects the processing yield of the electrode assembly 22 and may also affect the use performance of the electrode assembly 22.

Therefore, the ratio of the width sum of all the reinforcing structures 33 arranged along the width direction W of the first electrode plate 30 to the width Wl of the first electrode plate 30 should not be too large or too small. For example, the ratio may be set to be greater than or equal to 1/3; further, the ratio is set to be greater than or equal to 0.4, to reduce the risk of localized misalignment of the first electrode plate 30. For another example, the ratio may be set to be less than or equal to 0.8; further, the ratio is set to be less than or equal to 0.6, to enhance the effect of the reinforcing structure 33. For another example, the ratio may be specifically set to 1/3, 0.4, 0.45, 0.5, 0.55, 0.6, 0.65, 0.7, 0.75, or 0.8.

In these embodiments of this application, for any single reinforcing structure 33, the ratio of the width W2 of the reinforcing structure 33 along the width direction W of the first electrode plate 30 to the width W1 of the first electrode plate 30 may also be set based on practical applications. For example, the ratio of the width W2 of the reinforcing structure 33 to the width W1 of the first electrode plate 30 should not be too small. Since the width W1 of the first electrode plate 30 is limited, setting this ratio to be too small may significantly increase the processing difficulty of the reinforcing structure 33 and also reduce the strength of the reinforcing structure 33. Therefore, the ratio of the width W2 of the reinforcing structure 33 to the width W1 of the first electrode plate 30 is typically set to be greater than or equal to 0.0025; further, the ratio may be set to be greater than or equal to 0.01.

In these embodiments of this application, as shown in FIG. 6 to FIG. 9, a ratio of a shortest length L3 between an end portion of the reinforcing structure 33 close to the bending segment 32 and a centerline Lb of the bending segment 32 to a thickness T1 of the first electrode plate 30 is within a value range of [0.016, 0.5], preferably [0.05, 0.4]. Specifically, the centerline Lb of the bending segment 32 in these embodiments of this application is perpendicular to the length direction L of the first electrode plate 30 and is located in a middle region of the bending segment 32. The thickness T1 of the first electrode plate 30 in these embodiments of this application may be equal to the thickness of regions of the laminated segment 31 other than the reinforcing structure 33 or equal to the thickness of the bending segment 32, and these embodiments of this application are not limited thereto.

If the ratio of the shortest length L3 to the thickness T1 of the first electrode plate 30 is too small, since the thickness T1 of the first electrode plate 30 is typically small, the reinforcing structure 33 is too close to the centerline Lb of the bending segment 32, limiting the range of the bending segment 32 restricted by the reinforcing structure 33 during bending of the first electrode plate 30, making it difficult to bend the first electrode plate 30, and increasing the processing difficulty of the electrode assembly 22. Additionally, if a notch 34 is provided in the middle region of the bending segment 32, the reinforcing structure 33 affects a region around the notch 34 of the bending segment 32, increasing the processing difficulty of the notch 34. Conversely, if the ratio of the shortest length L3 to the thickness T1 of the first electrode plate 30 is too large, the reinforcing structure 33 is too far from the centerline Lb of the bending segment 32, making it difficult for the reinforcing structure 33 to restrict the bending segment 32, so that the first electrode plate 30 is still prone to misalignment during bending, thereby affecting the processing efficiency and yield of the electrode assembly 22.

Therefore, the ratio of the shortest length L3 to the thickness T1 of the first electrode plate 30 should not be too large or too small. For example, the ratio of the shortest length L3 between the end portion of the reinforcing structure 33 close to the bending segment 32 and the centerline Lb of the bending segment 32 to the thickness T1 of the first electrode plate 30 may be set to be greater than or equal to 0.016, further, greater than or equal to 0.05, to improve the bending efficiency of the first electrode plate 30. For another example, the ratio of the shortest length L3 to the thickness T1 of the first electrode plate 30 may alternatively be set to be less than or equal to 0.5, further, less than or equal to 0.4, to reduce the likelihood that the first electrode plate 30 is still prone to misalignment during bending. For another example, the ratio of the shortest length L3 to the thickness T1 of the first electrode plate 30 may be set to 0.016, 0.03, 0.05, 0.08, 0.1, 0.13, 0.15, 0.18, 0.2, 0.23, 0.25, 0.28, 0.3, 0.33, 0.35, 0.38, 0.4, 0.43, 0.45, 0.48, or 0.5.

In some embodiments, the shortest length L3 between the end portion of the reinforcing structure 33 close to the bending segment 32 and the centerline Lb of the bending segment 32 may be set based on practical applications. For example, the shortest length L3 may be set to be within a value range of [0.5 mm, 3 mm], further, the shortest length L3 may alternatively be set to be within a value range of [1 mm, 2 mm]. For another example, the shortest length L3 may alternatively be set to 0.5 mm, 1 mm, 1.5 mm, 2 mm, 2.5 mm, or 3 mm.

In some embodiments, when multiple reinforcing structures 33 are arranged along the width direction W of the first electrode plate 30, the shortest lengths between the end portions of the multiple reinforcing structures 33 close to the bending segment 32 and the centerline Lb of the bending segment 32 may be set to be equal or not equal, for example, they may be set to be equal to ensure a more uniform positional distribution of the multiple reinforcing structures 33 in the width direction W of the first electrode plate 30, thereby enhancing the effect of the reinforcing structure 33.

In these embodiments of this application, a size of the reinforcing structure 33 along the length direction L of the first electrode plate 30 may be set based on practical applications. For example, the reinforcing structure 33 does not cross a centerline La of the laminated segment 31 in the length direction L of the first electrode plate 30, and a ratio of a span L2 of the reinforcing structure 33 along the length direction L of the first electrode plate 30 to a length L1 of the laminated segment 31 is within a value range of [10%, 50%). Specifically, as shown in FIG. 6 to FIG. 9, the centerline La of the laminated segment 31 in the length direction L of the first electrode plate 30 is perpendicular to the length direction L of the first electrode plate 30, and the center La of the laminated segment 31 is located in a middle region of the laminated segment 31. Since two opposite ends of the laminated segment 31 along the length direction L of the first electrode plate 30 may be respectively connected to bending segments 32, the reinforcing structures 33 may be respectively provided at two opposite ends of the laminated segment 31 along the length direction L of the first electrode plate 30. For the reinforcing structure 33 at one end of the laminated segment 31 close to the bending segment 32, the reinforcing structure 33 may be set not to cross the centerline La of the laminated segment 31 in the length direction L of the first electrode plate 30 to avoid affecting the reinforcing structure 33 at the other end of the laminated segment 31.

Since the reinforcing structure 33 does not cross the centerline La of the laminated segment 31 in the length direction L of the first electrode plate 30, the ratio of the span L2 of the reinforcing structure 33 along the length direction L of the first electrode plate 30 to the length L1 of the laminated segment 31 is less than 50%. The ratio of the span L2 of the reinforcing structure 33 along the length direction L of the first electrode plate 30 to the length L1 of the laminated segment 31 should not be set to be too small; for example, it is typically set to be greater than or equal to 10% to ensure that the span L2 of the reinforcing structure 33 is sufficiently large to enhance the reinforcement effect of the reinforcing structure 33. For example, the ratio of the span L2 of the reinforcing structure 33 along the length direction L of the first electrode plate 30 to the length L1 of the laminated segment 31 may typically be set to 10%, 15%, 20%, 25%, 30%, 35%, 40%, 45%, or 48%.

FIG. 10 shows a schematic diagram of a partial structure of a first electrode plate 30 according to another embodiment of this application, and FIG. 10 shows the first electrode plate 30 in an unfolded state, for example, FIG. 10 may show a state before the first electrode plate 30 is wound or laminated to form the electrode assembly 22. As shown in FIG. 10, the reinforcing structure 33 may alternatively be set in a way as shown in FIG. 10. Specifically, considering that two opposite ends of the laminated segment 31 along the length direction L of the first electrode plate 30 may be respectively connected to bending segments 32, if reinforcing structures 33 are provided in regions of the laminated segment 31 close to the bending segments 32 at both ends, the reinforcing structure 33 may be set to cross the centerline La of the laminated segment 31 in the length direction L of the first electrode plate 30.

Correspondingly, as shown in FIG. 6 to FIG. 10, a ratio of the span L2 of the reinforcing structure 33 along the length direction L of the first electrode plate 30 to the length L1 of the laminated segment 31 is within a value range of [10%, 100%]. Since the reinforcing structure 33 may cross the centerline La of the laminated segment 31 in the length direction L of the first electrode plate 30, the ratio of the span L2 of the reinforcing structure 33 along the length direction L of the first electrode plate 30 to the length L1 of the laminated segment 31 may be less than or equal to 100%. The ratio of the span L2 of the reinforcing structure 33 along the length direction L of the first electrode plate 30 to the length L1 of the laminated segment 31 should not be set to be too small; for example, the ratio may typically be set to be greater than or equal to 10% to ensure that the span L2 of the reinforcing structure 33 is sufficiently large to enhance the reinforcement effect of the reinforcing structure 33. For example, the ratio of the span L2 of the reinforcing structure 33 along the length direction L of the first electrode plate 30 to the length L1 of the laminated segment 31 may typically be set to 10%, 15%, 20%, 25%, 30%, 35%, 40%, 45%, 50%, 55%, 60%, 65%, 70%, 75%, 80%, 85%, 90%, 95%, or 100%.

In these embodiments of this application, the reinforcing structure 33 is inclined relative to the width direction W of the first electrode plate 30. The reinforcing structure 33 in these embodiments of this application is a strip-shaped structure, and the reinforcing structure 33 is inclined relative to the width direction W of the first electrode plate 30, meaning that an extension direction of the reinforcing structure 33 is different from the width direction W of the first electrode plate 30, or the extension direction of the reinforcing structure 33 is not parallel to the width direction W of the first electrode plate 30.

If the reinforcing structure 33 is not inclined relative to the width direction W of the first electrode plate 30, it is difficult for the reinforcing structure 33 to provide a reinforcement effect, and during bending of the first electrode plate 30, it is difficult for the reinforcing structure 33 to restrict the position of the bending segment 32. Therefore, the reinforcing structure 33 may be set to be inclined relative to the width direction W of the first electrode plate 30, so that the reinforcing structure 33 can provide a reinforcement effect in a direction perpendicular to the width direction W of the first electrode plate 30, thereby restricting a bending position of the first electrode plate 30.

In some embodiments, an inclination angle of the reinforcing structure 33 relative to the width direction W of the first electrode plate 30 may be set based on practical applications. For example, an included angle α between the reinforcing structure 33 and the width direction W of the first electrode plate 30 is within a value range of [45°, 135°]. If the included angle α is set to be too large or too small, for example, less than 45° or greater than 135°, the reinforcement effect of the reinforcing structure 33 in the direction perpendicular to the width direction W of the first electrode plate 30 is far less than that in a direction parallel to the width direction W of the first electrode plate 30, reducing the anti-bending and anti-misalignment effects of the reinforcing structure 33.

Therefore, the included angle α should not be set to be too large or too small. For example, the included angle α may be within a value range of [45°, 135°], further, within a value range of [60°, 120°], and even further, the included angle α may be set to 90° to enhance the effect of the reinforcing structure 33. The included angle α may be set to 45°, 50°, 55°, 60°, 65°, 70°, 75°, 80°, 85°, 90°, 95°, 100°, 105°, 110°, 115°, 120°, 125°, 130°, or 135°.

In these embodiments of this application, the first electrode plate 30 includes multiple laminated segments 31, the bending segment 32 is connected to a first laminated segment 313 and a second laminated segment 314 among the multiple laminated segments 31, and a region of the first laminated segment 313 close to the bending segment 32 and a region of the second laminated segment 314 close to the bending segment 32 are each provided with the reinforcing structure 33. Specifically, as shown in FIG. 6 to FIG. 10, the bending segment 32 is connected to two laminated segments 314, such that when the first electrode plate 30 is bent at the bending segment 32, the two laminated segments 31 can be laminated along the thickness direction T of the laminated segment 31 to form the electrode assembly 22. The reinforcing structures 33 are respectively provided in the region of the first laminated segment 313 close to the bending segment 32 and in the region of the second laminated segment 314 close to the bending segment 32, so that a region between a reinforcing structure 331 of the first laminated segment 313 and a reinforcing structure 332 of the second laminated segment 314 includes the bending segment 32. This allows the reinforcing structure 331 of the first laminated segment 313 and the reinforcing structure 332 of the second laminated segment 314 to jointly restrict the position of the bending segment 32, reducing misalignment, bending, and wrinkles of the first laminated segment 313 and the second laminated segment 314 during bending of the first electrode plate 30 and more accurately locating the bending segment 32, thereby improving the processing efficiency and yield of the electrode assembly 22 and consequently improving the performance of the battery cell 20.

It should be understood that the reinforcing structure 331 provided on the first laminated segment 313 is applicable to all the above descriptions regarding the reinforcing structure 33 provided on the laminated segment 33. Similarly, the reinforcing structure 332 provided on the second laminated segment 314 is also applicable to all the above descriptions regarding the reinforcing structure 33 provided on the laminated segment 33. For brevity, details are not repeated herein again.

Furthermore, the parameters such as position, number, size, and shape of the reinforcing structure 331 provided on the first laminated segment 313 close to the bending segment 32 and the reinforcing structure 332 provided on the second laminated segment 314 close to the bending segment 32 in these embodiments of this application may be the same or different. For example, the reinforcing structure 331 of the first laminated segment 313 may have the same size and shape as the reinforcing structure 332 of the second laminated segment 314 to facilitate processing.

For another example, the reinforcing structure 331 of the first laminated segment 313 and the reinforcing structure 332 of the second laminated segment 314 are correspondingly positioned in the width direction W of the first electrode plate 30. Specifically, as shown in FIG. 6 to FIG. 9, the reinforcing structure 331 of the first laminated segment 313 and the reinforcing structure 332 of the second laminated segment 314 are correspondingly positioned in the width direction W of the first electrode plate 30, meaning that the reinforcing structure 331 of the first laminated segment 313 and the reinforcing structure 332 of the second laminated segment 314 are substantially symmetrical in position relative to the bending segment 32. Thus, when the first electrode plate 30 is bent along the bending segment 32, the reinforcing structure 331 of the first laminated segment 313 and the reinforcing structure 332 of the second laminated segment 314 can substantially overlap, providing a simple structure that is easy to process.

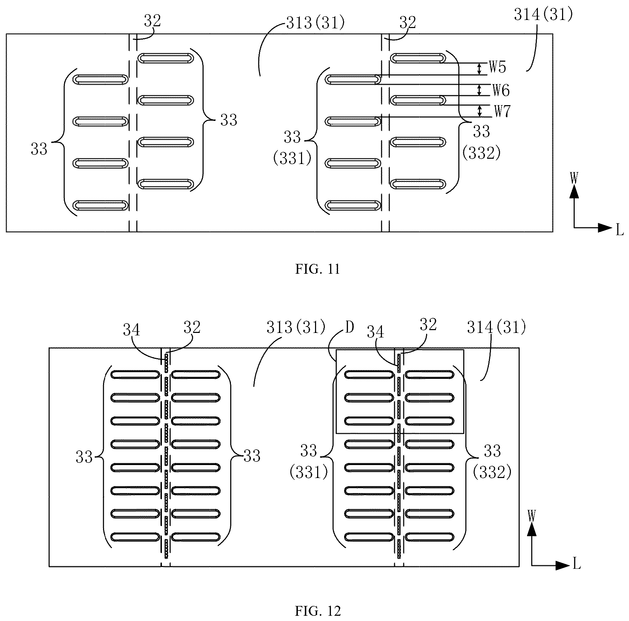

For another example, the reinforcing structure 331 of the first laminated segment 313 and the reinforcing structure 332 of the second laminated segment 314 are misaligned in the width direction W of the first electrode plate 30. Specifically, FIG. 11 shows a schematic diagram of a partial structure of a first electrode plate 30 according to another embodiment of this application, and FIG. 11 shows the first electrode plate 30 in an unfolded state, for example, FIG. 11 may show a state before the first electrode plate 30 is wound or laminated to form the electrode assembly 22. Unlike the configuration of the reinforcing structure 33 shown in FIG. 6, as shown in FIG. 10 and FIG. 11, the reinforcing structure 331 of the first laminated segment 313 and the reinforcing structure 332 of the second laminated segment 314 may be misaligned, meaning that the reinforcing structure 331 of the first laminated segment 313 and the reinforcing structure 332 of the second laminated segment 314 are asymmetrical in position relative to the bending segment 32, and when the first electrode plate 30 is bent along the bending segment 32, the reinforcing structure 331 of the first laminated segment 313 and the reinforcing structure 332 of the second laminated segment 314 cannot fully overlap. For example, as shown in FIG. 10, some regions overlap and some regions do not overlap; alternatively, as shown in FIG. 11, all regions do not overlap. Thus, the positions of the reinforcing structure 331 of the first laminated segment 313 and the reinforcing structure 332 of the second laminated segment 314 are more flexibly set. When the first electrode plate 30 is bent to form the electrode assembly 22, the space occupied by the reinforcing structure 331 of the first laminated segment 313 and the reinforcing structure 332 of the second laminated segment 314 can be adjusted, rationally utilizing the space between different electrode plate layers, thereby increasing the space utilization rate of the electrode assembly 22 within the battery cell 20 and consequently increasing the energy density of the battery cell 20.

In some embodiments, the reinforcing structure 331 of the first laminated segment 313 and the reinforcing structure 332 of the second laminated segment 314 are arranged at an equal interval in the width direction W of the first electrode plate 30. Specifically, for the corresponding configuration shown in FIG. 6 to FIG. 9, the reinforcing structure 331 of the first laminated segment 313 and the reinforcing structure 332 of the second laminated segment 314 being arranged at an equal interval in the width direction W of the first electrode plate 30 means that intervals between the multiple reinforcing structures 331 of the first laminated segment 313 arranged along the width direction W of the first electrode plate 30 are equal, and correspondingly, intervals between the multiple reinforcing structures 332 of the second laminated segment 314 arranged along the width direction W of the first electrode plate 30 are also equal. For the misalignment shown in FIG. 11, the reinforcing structure 331 of the first laminated segment 313 and the reinforcing structure 332 of the second laminated segment 314 being arranged at an equal interval in the width direction W of the first electrode plate 30 means that distances between the first reinforcing structure 331 of the first laminated segment 313 and the two closest reinforcing structures 332 of the second laminated segment 314 are respectively W5 and W6, where W5 is equal to W6. In addition, distances between the second reinforcing structure 332 of the second laminated segment 314 and the two closest reinforcing structures 331 of the first laminated segment 313 are respectively W6 and W7, where W6 is equal to W7. Similarly, a distance between any reinforcing structure 331 of the first laminated segment 313 and the closest reinforcing structure 332 of the second laminated segment 314 is W5.

By arranging the reinforcing structure 331 of the first laminated segment 313 and the reinforcing structure 332 of the second laminated segment 314 at an equal interval in the width direction W of the first electrode plate 30, the reinforcing structure 331 of the first laminated segment 313 and the reinforcing structure 332 of the second laminated segment 314 can be uniformly arranged, not only facilitating processing but also ensuring uniform distribution of the reinforcing structures 33, thereby reducing the risk of misalignment in different regions of the first laminated segment 313 and the second laminated segment 314 during bending of the first electrode plate 30, and improving the processing efficiency and yield of the electrode assembly 22.

In some embodiments, the reinforcing structure 331 of the first laminated segment 313 includes a protrusion structure protruding from a surface of the first laminated segment 313, and the reinforcing structure 332 of the second laminated segment 314 includes a protrusion structure protruding from a surface of the second laminated segment 314, where a protrusion direction of the reinforcing structure 331 of the first laminated segment 313 is opposite to a protrusion direction of the reinforcing structure 332 of the second laminated segment 314. Thus, after the first electrode plate 30 is bent along the bending segment 32, the first laminated segment 313 and the second laminated segment 314 are laminated, and the protrusion direction of the reinforcing structure 331 of the first laminated segment 313 is the same as the protrusion direction of the reinforcing structure 332 of the second laminated segment 314. When the reinforcing structure 332 of the second laminated segment 314 protrudes from one side surface of the second laminated segment 314 and is recessed relative to the other side surface of the second laminated segment 314, a portion of the reinforcing structure 331 of the first laminated segment 313 protruding from the surface of the first laminated segment 313 can be accommodated in the recessed portion of the reinforcing structure 332 of the second laminated segment 314, thereby reducing gaps between different electrode plate layers. For example, if both the first laminated segment 313 and the second laminated segment 314 form protruding reinforcing structures 33 by stamping or other means, one side surface of the reinforcing structure 33 protrudes from other regions of the laminated segment 31, while the other side surface is recessed relative to other regions of the laminated segment 31. If, after the first electrode plate 30 is bent along the bending segment 32, the reinforcing structure 331 of the first laminated segment 313 and the reinforcing structure 332 of the second laminated segment 314 have at least partial overlapping regions and same protrusion directions, the protruding portion of the reinforcing structure 331 of the first laminated segment 313 can be located in the recessed portion of the reinforcing structure 332 of the second laminated segment 314, or the protruding portion of the reinforcing structure 332 of the second laminated segment 314 can be located in the recessed portion of the reinforcing structure 331 of the first laminated segment 313, saving space between the two laminated segments 31, that is, reducing the distance between the two laminated segments 31, thereby increasing the space utilization rate of the electrode assembly 22 within the battery cell 20 and consequently increasing the energy density of the battery cell 20.

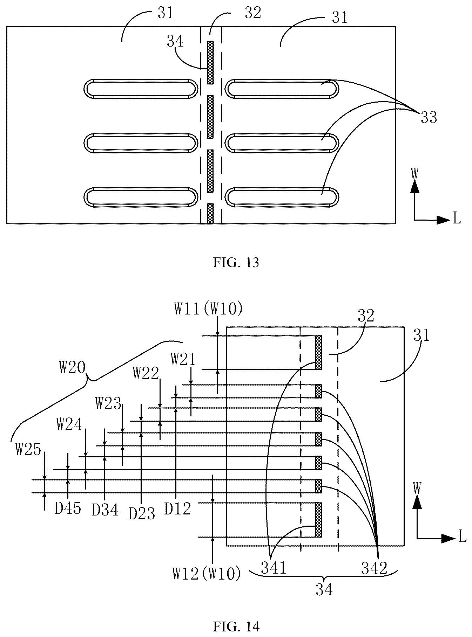

FIG. 12 shows a schematic diagram of a partial structure of a first electrode plate 30 according to still another embodiment of this application, and FIG. 12 shows the first electrode plate 30 in an unfolded state, for example, FIG. 12 may show a state before the first electrode plate 30 is wound or laminated to form the electrode assembly 22. FIG. 13 is an enlarged view of a partial structure of the first electrode plate 30 according to yet another embodiment of this application, for example, FIG. 13 is an enlarged view of region D in FIG. 12.

As shown in FIG. 12 and FIG. 13, unlike FIG. 6, the bending segment 32 is provided with a notch 34 extending along the width direction W of the first electrode plate 30. On one hand, the provided notch 34 can locate the bending segment 32, reducing deviation of the first electrode plate 30 at the bending position, thereby reducing misalignment between different electrode plates of the electrode assembly 22; on the other hand, the notch 34 can reduce the bending difficulty and the resistance during bending, thereby improving the processing efficiency of the electrode assembly 22.

It should be understood that in these embodiments of this application, the difference between FIG. 12 and FIG. 6 lies in the notch 34, and other structures in FIG. 12 are applicable to the relevant descriptions of FIG. 6 to FIG. 9. For brevity, details are not repeated herein again.

In these embodiments of this application, the structure of the notch 34 may be flexibly set based on practical applications. For example, the notch 34 may be a through hole, which is easy to process and can significantly reduce the resistance during bending, thereby improving the processing efficiency of the electrode assembly 22. For another example, the notch 34 may alternatively be a groove. This can not only reduce the resistance during bending but also reduce loss of the structural strength of the first electrode plate 30 of the electrode assembly 22.

Additionally, if the notch 34 is a groove, the groove may be achieved in various ways. For example, the groove may be achieved by locally thinning the first electrode plate 30, such that a thickness of a bottom wall of the groove is less than a thickness of regions of the first electrode plate 30 other than the groove. For another example, an opening direction of the groove may be flexibly set based on practical applications. For example, after the first electrode plate 30 is bent, an opening of the groove may face toward the center of the electrode assembly 22, or the opening may face away from the center of the electrode assembly 22, and these embodiments of this application are not limited thereto.

In some embodiments, if the bending region 32 in these embodiments of this application includes multiple notches 34, for example, if it may include multiple notches 34 arranged along the width direction W of the first electrode plate 30, the structure types of the multiple notches 34 may be the same or different. For example, some notches 34 may be set as through holes, while some other notches 34 may be set as grooves, or all notches 34 may be set as through holes, and these embodiments of this application are not limited thereto.

In these embodiments of this application, multiple notches 34 are provided, and the reinforcing structure 33 corresponds to a connecting region between two adjacent notches 34 among the multiple notches 34, allowing the reinforcing structure 33 to cooperate with the multiple notches 34 to jointly locate and restrict the position of the bending segment 32 and enhance the structural strength of the first electrode plate 30 in the region around the bending segment 32. This minimizes misalignment or wrinkles in different regions of the first electrode plate 30 along the width direction W during bending of the first electrode plate 30, improving the processing efficiency and yield of the electrode assembly 22.

It should be understood that the size of the notch 34 in these embodiments of this application can be set based on practical applications. FIG. 14 shows a schematic diagram of a partial structure of a first electrode plate 30 according to still yet another embodiment of this application, and FIG. 14 shows the first electrode plate 30 in an unfolded state, for example, FIG. 14 may show a state before the first electrode plate 30 is wound or laminated to form the electrode assembly 22. For ease of description, FIG. 14 only shows multiple notches 34 arranged along the width direction W of the first electrode plate 30, without showing the reinforcing structure 33, but the first electrode plate 30 may also be provided with the reinforcing structure 33, applicable to the relevant descriptions above. For brevity, details are not repeated herein again.

As shown in FIG. 14, multiple notches 34 are provided, the multiple notches 34 include edge notches 341 located at two ends of the first electrode plate 30 along the width direction W of the first electrode plate 30 and a middle notch 342 located in a middle region of the first electrode plate 30, where a length W10 of the edge notches 341 along the width direction W of the first electrode plate 30 is greater than a length W20 of the middle notch 342 along the width direction W of the first electrode plate 30. Considering that during bending of the bending segment 32 of the first electrode plate 30, the resistance at the edge positions of two ends of the first electrode plate 30 in the width direction W is greater than that at the middle position, and the crease fluctuation at the edge positions of the first electrode plate 30 is more significant, setting the length W10 of the edge notches 341 along the width direction W to be greater than the length W20 of the middle notch 342 along the width direction W can more significantly reduce the resistance at the edge positions of the first electrode plate 30, reduce fluctuations, and further reduce the likelihood of deviation during bending of the first electrode plate 30, thereby reducing the possibility of active material precipitation or failure of the electrode assembly 22, and improving the processing efficiency and yield of the electrode assembly 22.

It should be understood that the width direction W of the first electrode plate 30 in these embodiments of this application may be in a vertical direction as shown in FIG. 14, and two ends of the first electrode plate 30 along the width direction W include an upper edge and a lower edge of the first electrode plate 30 as shown in FIG. 14. Therefore, the multiple notches 34 in these embodiments of this application may include at least one edge notch 341 located close to the upper edge and/or at least one edge notch 341 located close to the lower edge.

Additionally, when the multiple notches 34 include multiple edge notches 341, the lengths of the multiple edge notches 341 along the width direction W of the first electrode plate 30 may be equal or not equal, and the length W10 of the edge notches 341 along the width direction W of the first electrode plate 30 in these embodiments of this application may refer to an average, minimum, or maximum length of the multiple edge notches 341 along the width direction W. For example, as shown in FIG. 14, in an example in which the multiple notches 341 include two edge notches 341, if a length of the upper edge notch 341 along the width direction W is W11, and a length of the lower edge notch 341 along the width direction W is W12, the length W10 of the edge notches 341 along the width direction W of the first electrode plate 30 in these embodiments of this application may be a minimum value of the lengths W11 and W12, but these embodiments of this application are not limited thereto.

Similar to the edge notches 341, the notches 34 in these embodiments of this application may include at least one middle notch 342 located in the middle region of the first electrode plate 30. If the notches 34 include multiple middle notches 342, the lengths of the multiple middle notches 342 along the width direction W of the first electrode plate 30 may be equal or not equal, and the length W20 of the middle notch 342 along the width direction W of the first electrode plate 30 in these embodiments of this application may refer to an average, minimum, or maximum length of the multiple middle notches 342 along the width direction W. For example, as shown in FIG. 14, in an example in which the multiple notches 342 include five middle notches 342, in an order from top to bottom, the lengths of the five middle notches 342 along the width direction W are respectively W21, W22, W23, W24, and W25, and the five middle notches 342 may be set to satisfy that the lengths W21, W22, W23, W24, and W25 are all equal, to facilitate processing. For another example, as shown in FIG. 14, still in an example in which the lengths of the five middle notches 342 along the width direction W are respectively W21, W22, W23, W24, and W25, the length W20 of the middle notch 342 along the width direction W in these embodiments of this application may be a maximum value of the lengths W21 to W25, but these embodiments of this application are not limited thereto.

In some embodiments, when the multiple notches 34 include multiple middle notches 342, intervals between the multiple middle notches 342 along the width direction W of the first electrode plate 30 may be equal or not equal. Specifically, as shown in FIG. 14, in an example in which the multiple notches 34 include five middle notches 342, in an order from top to bottom, the lengths of the intervals between the five middle notches 342 along the width direction W are respectively D12, D23, D34, and D45, and the five middle notches 342 may be set to satisfy that the interval lengths D12, D23, D34, and D45 are all equal.

Thus, by setting the lengths of the multiple middle notches 342 along the width direction W to be equal, the number of adjustments to the dimensional accuracy of different middle notches 342 can be reduced, reducing the processing difficulty. The intervals between the multiple middle notches 342 along the width direction W are set to be equal, that is, the middle notches 342 are uniformly distributed along the width direction W, so that the middle region of the first electrode plate 30 can be uniformly stressed along the width direction W, facilitating bending, and reducing the processing difficulty of the electrode assembly 22, thereby improving the processing efficiency and yield of the electrode assembly 22.

In these embodiments of this application, the size of the notch 34 may alternatively be set in a way different from that shown in FIG. 14. For example, multiple notches 34 are provided, and along the width direction W of the first electrode plate 30, the lengths of the multiple notches 34 are equal. By setting the dimensions along the width direction W of the multiple notches 34 arranged along the width direction W to be equal, the number of adjustments to the processing dimensions of the notches 34 can be reduced, reducing the processing difficulty and improving processing efficiency.

In some embodiments, along the length direction L of the first electrode plate 30, the notch 34 is located in a middle portion of the bending segment 32. Specifically, as shown in FIG. 12 to FIG. 14, the notch 34 is set to be located in the middle portion of the bending segment 32 along the length direction L of the first electrode plate 30, or the notch 34 is located in the middle portion of the bending segment 32 along the bending direction, allowing for more accurate positioning when the first electrode plate 30 is bent along the notch 34, minimizing misalignment and deviation of the first electrode plate 30, thereby improving the processing efficiency and yield of the electrode assembly 22.

In these embodiments of this application, the first electrode plate 30 may be processed to form the electrode assembly 22, for example, the first electrode plate 30 may be a positive electrode plate or a negative electrode plate.

In some embodiments, the first electrode plate 30 is an anode-free negative electrode plate. Specifically, the first electrode plate 30 may include a negative electrode current collector, and two opposite surfaces of the negative electrode current collector are not coated with a negative electrode active material. Thus, the first electrode plate 30 is thinner, and when assembled into an electrode assembly 22 and disposed within a battery cell 20, it can increase the space utilization rate of the electrode assembly 22, thereby increasing the energy density of the battery cell 20. Moreover, due to the smaller thickness of the first electrode plate 30, misalignment or wrinkles are more likely to occur during bending of the first electrode plate 30, and the provision of the reinforcing structure 33 can effectively reduce the misalignment and wrinkles, improving the processing efficiency and yield of the electrode assembly 22.

In some embodiments, the thickness of the anode-free negative electrode plate is relatively small and can be flexibly set based on practical applications. For example, the thickness of the anode-free negative electrode plate is typically within a value range of [4 µm, 30 µm]. For another example, the thickness of the anode-free negative electrode plate may further be set to [5 µm, 17 µm]. For still another example, the thickness of the anode-free negative electrode plate may specifically be set to 4 µm, 5 µm, 6 µm, 8 µm, 10 µm, 12 µm, 15 µm, 17 µm, 20 µm, 22 µm, 25 µm, 27 µm, or 30 µm.

As an example, the negative electrode current collector may be a metal foil, foamed metal, or composite current collector. For example, as a metal foil, the negative electrode current collector may be made of aluminum or stainless steel with surface treated with silver, stainless steel, copper, aluminum, nickel, carbon electrode, carbon, nickel, or titanium. The composite current collector may include a polymer material substrate and a metal layer. The foamed metal may be foamed nickel, foamed copper, foamed aluminum, foamed alloy, foamed carbon, or the like. The composite current collector may be formed by forming a metal material (copper, copper alloy, nickel, nickel alloy, titanium, titanium alloy, silver, silver alloy, or the like) on a polymer material substrate (for example, a substrate of polypropylene, polyethylene terephthalate, polybutylene terephthalate, polystyrene, or polyethylene).

In some implementations, the battery cell formed using the anode-free negative electrode plate in the embodiments of this application may be an anode-free sodium secondary battery.

An anode-free sodium secondary battery refers to a battery constructed without actively providing a negative electrode active material layer on the negative electrode plate side during manufacturing, for example, the negative electrode is not provided with a sodium metal or carbonaceous active material layer through processes such as coating or depositing to form a negative electrode active material layer during manufacturing of the battery. During the first charge, sodium ions gain electrons at an anode side and deposit as sodium metal on a surface of the current collector to form a sodium metal phase. During discharge, the sodium metal can be transformed into sodium ions and return to the positive electrode, enabling cyclic charging and discharging. Compared to other sodium secondary batteries, anode-free sodium secondary batteries can achieve higher energy density due to the absence of a negative electrode active material layer.

In some implementations, to improve battery performance, a negative electrode side of an anode-free sodium secondary battery may be provided with some functional coatings, such as carbonaceous materials, metal oxides, and alloys, to enhance the conductivity of the negative electrode current collector and improve the uniformity of sodium metal deposition.

In some implementations, a CB value of an anode-free sodium secondary battery is less than or equal to 0.1.

Specifically, the CB value is a capacity per unit area of the negative electrode plate divided by a capacity per unit area of the positive electrode plate in the secondary battery. Since an anode-free battery contains no or only a small quantity of functional coatings, the capacity per unit area of the negative electrode plate is small, and the CB value of the secondary battery is less than or equal to 0.1.

In some embodiments, the first electrode plate 30 may be a negative electrode plate, and the negative electrode plate may further include a negative electrode current collector and a negative electrode active material disposed on at least one surface of the negative electrode current collector.

As an example, the negative electrode current collector has two opposite surfaces in its thickness direction, and the negative electrode active material is disposed on either or both of the two opposite surfaces of the negative electrode current collector.

As an example, the negative electrode active material may include any negative electrode active materials that are well known in the art and used for battery cells. As an example, the negative electrode active material may include at least one of the following materials: artificial graphite, natural graphite, soft carbon, hard carbon, a silicon-based material, a tin-based material, lithium titanate, and the like.

In some embodiments, the first electrode plate 30 may alternatively be a positive electrode plate, and the positive electrode plate may include a positive electrode current collector and a positive electrode active material disposed on at least one surface of the positive electrode current collector.

As an example, the positive electrode current collector has two opposite surfaces in its thickness direction, and the positive electrode active material is disposed on either or both of the two opposite surfaces of the positive electrode current collector.

As an example, the positive electrode current collector may be a metal foil or a composite current collector. For example, as a metal foil, the positive electrode current collector may be made of aluminum or stainless steel with surface treated with silver, stainless steel, copper, aluminum, nickel, carbon electrode, carbon, nickel, or titanium. The composite current collector may include a polymer material substrate and a metal layer. The composite current collector may be formed by forming a metal material (aluminum, aluminum alloy, nickel, nickel alloy, titanium, titanium alloy, silver, silver alloy, or the like) on a polymer material substrate (for example, a substrate of polypropylene, polyethylene terephthalate, polybutylene terephthalate, polystyrene, or polyethylene).

As an example, the positive electrode active material may include at least one of the following materials: lithium-containing phosphate, lithium transition metal oxide, and respective modified compounds thereof. However, this application is not limited to these materials, and other conventional materials that can be used as positive electrode active materials for batteries may also be used. Only one of these positive electrode active materials may be used alone, or two or more of them are used in combination. Examples of the lithium-containing phosphate may include, but are not limited to, at least one of lithium iron phosphate (for example, LiFePO₄ (also referred to as LFP)), a composite material of lithium iron phosphate and carbon, lithium manganese phosphate (for example, LiMnPO₄), a composite material of lithium manganese phosphate and carbon, lithium manganese iron phosphate, and a composite material of lithium manganese iron phosphate and carbon.

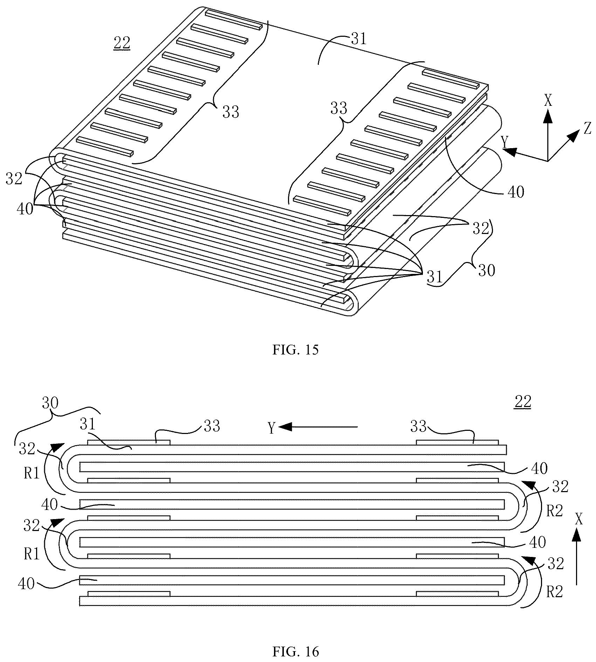

In these embodiments of this application, the electrode assembly 22 can be formed by bending the first electrode plate 30. Specifically, FIG. 15 shows a schematic structural diagram of an electrode assembly 22 according to an embodiment of this application, for example, the electrode assembly 22 shown in FIG. 15 may be a schematic diagram of the electrode assembly 22 included in the battery cell 20 shown in FIG. 4 and FIG. 5. FIG. 16 shows a schematic side view of an electrode assembly 22 according to an embodiment of this application, for example, FIG. 16 may be a schematic side view of the electrode assembly 22 shown in FIG. 15 in a direction perpendicular to a height direction Z of the battery cell 20. For ease of description, the electrode assembly 22 as shown in FIG. 15 and FIG. 16 does not include a separating film, but a separating film may be provided between different electrode plates of the electrode assembly 22.

As shown in FIG. 15 and FIG. 16, the electrode assembly 22 according to these embodiments of this application may include a first electrode plate 30, and the first electrode plate 30 may be any of the first electrode plates 30 shown in FIG. 6 to FIG. 14, where the first electrode plate 30 is configured to be bent at the bending segment 32. Specifically, the first electrode plate 30 includes at least one bending segment 32, and the first electrode plate 30 may be bent at each bending segment 32. For example, the bending direction in these embodiments of this application may include a clockwise direction R1 and/or a counterclockwise direction R2, and the first electrode plate 30 may include multiple bending segments 32 with the same or different bending directions. For example, for different types of electrode assemblies 22, the first electrode plate 30 may include bending segments 32 which all have the same bending direction and are bent in the same direction to form the electrode assembly 22. Alternatively, as shown in FIG. 15 and FIG. 16, the first electrode plate 30 may include bending segments 32 with different bending directions, thereby forming the electrode assembly 22 as shown in FIG. 15 and FIG. 16, and these embodiments of this application are not limited thereto.

In these embodiments of this application, the electrode assembly further includes: multiple second electrode plates 40 with a polarity opposite to that of the first electrode plate 30, where the multiple second electrode plates 40 and the multiple laminated segments 31 are alternately laminated along the thickness direction T of the laminated segments 31. Specifically, as shown in FIG. 15 and FIG. 16, in an example in which the first electrode plate 30 is a negative electrode plate, when the first electrode plate 30 is bent, the multiple laminated segments 31 of the first electrode plate 30 are mutually laminated along the thickness direction T of the laminated segments 31, that is, laminated along a width direction X of the battery cell 20. Correspondingly, the multiple second electrode plates 40 may be disposed between the multiple laminated segments 31 in a laminated manner. Thus, during the bending of the electrode assembly 22, there is no need to bend the second electrode plates 40, reducing the number of layers to be bent and reducing the bending difficulty of the electrode assembly 22.

In some embodiments, the first electrode plate 30 includes multiple bending segments 32, where two bending segments 32 at two ends of the same laminated segment 31 have opposite bending directions. Specifically, as shown in FIG. 15 and FIG. 16, the first electrode plate 30 may include multiple bending segments 32. For the two bending segments 32 connected to two ends of the same laminated segment 31, the bending directions of the two bending segments 32 may be set to be different, for example, the two bending segments 32 may be bent in the clockwise direction R1 and the counterclockwise direction R2, respectively, thereby forming a Z-shaped first electrode plate 30. By bending in different directions, a laminated electrode assembly 22 is formed, and the structure is simple and easy to achieve.

In these embodiments of this application, as shown in FIG. 15 and FIG. 16, the reinforcing structure 33 may protrude from the surface of the laminated segment 31, and the protrusion directions of the reinforcing structures of the laminated segments 31 that are laminated being the same is used as an example herein. However, after subsequent processing of the electrode assembly 22 and during the use of the battery cell 20 after the battery cell 20 is assembled, the reinforcing structure 33 may have a change.

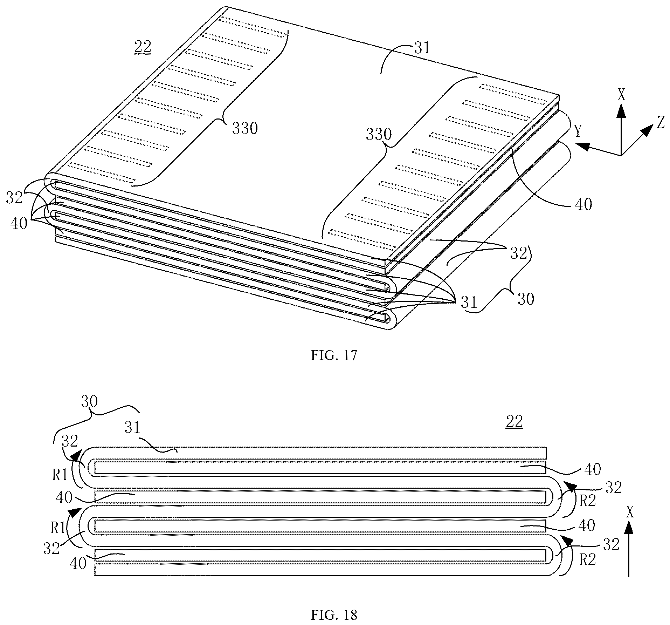

For example, the reinforcing structure 33 is an indentation 330 on the surface of the laminated segment 31. Specifically, FIG. 17 shows a schematic structural diagram of an electrode assembly 22 according to an embodiment of this application. For example, the electrode assembly 22 shown in FIG. 17 may be a schematic diagram of the electrode assembly 22 included in the battery cell 20 shown in FIG. 4 and FIG. 5, and compared to FIG. 17 and FIG. 15, FIG. 17 may be a schematic diagram of the electrode assembly 22 shown in FIG. 15 after the reinforcing structure 33 of the electrode assembly 22 has changed. FIG. 18 shows a schematic side view of an electrode assembly 22 according to an embodiment of this application. For example, FIG. 18 may be a schematic diagram of a side view of the electrode assembly 22 shown in FIG. 17 perpendicular to a height direction Z of the battery cell 20. Correspondingly, FIG. 18 may be a schematic diagram of the electrode assembly 22 shown in FIG. 16 after the reinforcing structure 33 of the electrode assembly 22 has changed. For ease of description, similar to FIG. 15 and FIG. 16, the electrode assembly 22 shown in FIG. 17 and FIG. 18 does not include a separating film, but a separating film may be provided between different electrode plates of the electrode assembly 22.

As shown in FIG. 17 and FIG. 18, the reinforcing structure 33 may be an indentation 330 on the surface of the laminated segment 31, that is, the reinforcing structure 33 may not protrude from the surface of other regions of the laminated segment 31 and is substantially flush with the surface of other regions of the laminated segment 31, but leaving traces on the surface of the laminated segment 31. Thus, during the bending of the first electrode 30, the reinforcing structure 33 can be used to restrict the position of the bending segment 32, and subsequently, as an indentation 330 on the surface of the laminated segment 31, the reinforcing structure 33 does not occupy the gaps between different electrode plate layers of the electrode assembly 22, increasing the space utilization rate of the electrode assembly 22 within the battery cell 20 and consequently increasing the energy density of the battery cell 20.

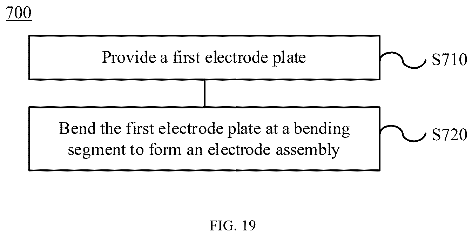

It should be understood that the reinforcing structure 33 in these embodiments of this application can be formed as an indentation 330 in various ways. The changes to the reinforcing structure 33 in these embodiments of this application are exemplified below with reference to the drawings. FIG. 19 shows a schematic flowchart of a method 700 for manufacturing an electrode assembly 22 according to an embodiment of this application. As shown in FIG. 19, the method 700 includes: S710, providing a first electrode plate 30, where the first electrode plate 30 includes a laminated segment 31 and a bending segment 32, the bending segment 32 is connected to the laminated segment 31, and a region of the laminated segment 31 close to the bending segment 32 is provided with a reinforcing structure 33; and S720, bending the first electrode plate 30 at the bending segment 32 to form the electrode assembly 22.

It should be understood that the first electrode plate 30 in the method 700 may be any of the first electrode plates 30 shown in FIG. 6 to FIG. 14. For example, the first electrode plate 30 may be provided with a reinforcing structure 33, and during the process of bending the first electrode plate 30 to form the electrode assembly 22, the bending position of the first electrode plate 30 can be restricted, allowing the first electrode plate 30 to be bent at the bending segment 32, reducing bending misalignment of the first electrode plate 30, also reducing wrinkles in the region of the laminated segment 31 close to the bending segment 32, and improving the processing precision of the electrode assembly 22, thereby improving the processing yield and performance of the electrode assembly 22, for example, reducing lithium precipitation caused by misalignment or wrinkles of the first electrode plate 30, thereby improving the reliability of the electrode assembly 22.

Additionally, the electrode assembly 22 can be formed by bending the bending segment 32, and different types of electrode assemblies 22 can be obtained by different bending methods, and these embodiments of this application are not limited thereto.

Specifically, based on the description above, the reinforcing structure 33 in these embodiments of this application can be achieved in various ways. For example, the reinforcing structure 33 may be a reinforcing sheet disposed on the surface of the first electrode plate 30, and changes to such a reinforcing structure 33 during subsequent processing and use of the battery cell 20 may be related to the material of the reinforcing sheet.

For another example, the reinforcing structure 33 may alternatively be formed by stamping or other methods. Specifically, the method 700 further includes: stamping the laminated segment 31 along a thickness direction T of the laminated segment 31 to form a protrusion structure on a surface of the laminated segment 31, where the reinforcing structure 33 includes the protrusion structure; and pressing the laminated segment 31 of the electrode assembly 22. The reinforcing structure 33 formed by stamping protrudes from the surface of other regions of the laminated segment 31, the reinforcing structure 33 protrudes relative to a first surface 311 of the laminated segment 31 and is recessed relative to a second surface 312 of the laminated segment 31, and the first surface 311 and the second surface 312 are disposed opposite each other. The reinforcing structure 33 formed in this way can be used to restrict the bending position of the first electrode plate 30 during bending of the first electrode plate 30, allowing the first electrode plate 30 to be bent at the bending segment 32, reducing bending misalignment of the first electrode plate 30 and also reducing wrinkles in the region of the laminated segment 31 close to the bending segment 32.

In some embodiments, such a protruding reinforcing structure 33 can be used to correspondingly obtain the electrode assembly 22 as shown in FIG. 15 and FIG. 16. To further reduce the gaps between the layers of the electrode assembly 22, the electrode assembly 22 may be pressed to obtain the electrode assembly 22 as shown in FIG. 17 and FIG. 18. After pressing, the size of the reinforcing structure 33 protruding from other regions of the laminated segment 31 is reduced, or the reinforcing structure 33 may even be substantially flush with other regions of the laminated segment 31, reducing the distance between the first electrode plate 30 and the second electrode plate 40, thereby shortening the ion transport path and improving the performance of the electrode assembly 22.

It should be understood that the electrode assembly 22 in these embodiments of this application may be pressed during subsequent processing or may be pressed during subsequent use of the battery cell 20.

In some embodiments, the pressing the laminated segment 31 of the electrode assembly 22 in these embodiments of this application includes: pressing the laminated segment 31 by hot pressing. For the electrode assembly 22 as shown in FIG. 15 and FIG. 16, the laminated segment 31 may be pressed by hot pressing to obtain the electrode assembly 22 as shown in FIG. 17 and FIG. 18.

In these embodiments of this application, due to the hot pressing process, the originally protruding reinforcing structure 33 is pressed, so that the size of the reinforcing structure 33 protruding from other regions of the laminated segment 31 is reduced, or the reinforcing structure 33 is even substantially flush with other regions of the laminated segment 31 and thus turns into an indentation 330 on the surface of the laminated segment 31. Additionally, the hot pressing process can further reduce the distance between the first electrode plate 30 and the second electrode plate 40, shortening the ion transport path and increasing the space utilization rate of the electrode assembly 22 within the battery cell 20, thereby increasing the energy density of the battery cell 20.

It should be understood that since the reinforcing structure 33 protrudes from the surface of the laminated segment 31 before hot pressing, even after hot pressing, when the reinforcing structure 33 can be substantially flush with other regions, an indentation 330 or trace is still formed on the surface of the laminated segment 31. Especially when the reinforcing structure 33 is formed by stamping, if the depth of the reinforcing structure 33 is increased, the indentation 330 is more pronounced. Additionally, during the use of the battery cell 20, the color of the region where the indentation 330 is located may differ from the color of other regions, for example, the color of the indentation 330 may become darker or blacker.

In some embodiments, the electrode assembly 22 may alternatively be pressed in other ways. For example, during the use of the battery cell 20, the electrode assembly 22 may swell, and after swelling, the size of the reinforcing structure 33 protruding from other regions of the laminated segment 31 is also be reduced, or the reinforcing structure 33 may even be pressed to be substantially flush with other regions of the laminated segment 31 and thus turns into an indentation 330 on the surface of the laminated segment 31. Specifically, the electrode assembly 22 may not undergo hot pressing, or after hot pressing, the reinforcing structure 33 still protrudes from the surface of other regions of the laminated segment 31. Subsequently, during the use of the battery cell 20, for example, during charging and discharging, the electrode assembly 22 may swell, so that the size of the protruding reinforcing structure 33 protruding from other regions of the laminated segment 31 is further reduced, or the reinforcing structure 33 is even substantially flush with other regions of the laminated segment 31 and thus turns into an indentation 330 on the surface of the laminated segment 31.

Therefore, the region of the laminated segment 31 of the first electrode plate 30 close to the bending segment 32 in these embodiments of this application is provided with the reinforcing structure 33, which can enhance the structural strength of the region of the laminated segment 31 close to the bending segment 32. Due to the high strength of the region of the laminated segment 31 close to the bending segment 32, the position of the bending segment 32 can be located through the reinforcing structure 33. During the process of bending the first electrode plate 30 to form the electrode assembly 22, the bending position of the first electrode plate 30 can be restricted, allowing the first electrode plate 30 to be bent at the bending segment 32, reducing bending misalignment of the first electrode plate 30, also reducing wrinkles in the region of the laminated segment 31 close to the bending segment 32, and improving the processing precision of the electrode assembly 22, thereby improving the processing yield and performance of the electrode assembly 22, for example, reducing lithium precipitation caused by misalignment or wrinkles of the first electrode plate 30, thereby improving the reliability of the electrode assembly 22.

Additionally, during subsequent processing or use of the electrode assembly 22 with the reinforcing structure 33, the reinforcing structure 33 can also turn into an indentation 330 on the surface of the electrode assembly 22, without occupying the gaps between different electrode plate layers of the electrode assembly 22, reducing the distance between the first electrode plate 30 and the second electrode plate 40, thereby shortening the ion transport path, increasing the space utilization rate of the electrode assembly 22 within the battery cell 20, and consequently increasing the energy density of the battery cell 20.

Although this application has been described with reference to preferred embodiments, various improvements can be made thereto, and components therein can be replaced with equivalents without departing from the scope of this application. In particular, as long as there is no structural conflict, the technical features mentioned in the various embodiments can be combined in any manner. This application is not limited to the specific embodiments disclosed herein but includes all technical solutions falling within the scope of the claims.

## Claims

1. An electrode plate, comprising:
a laminated segment (31); and
a bending segment (32), wherein the bending segment (32) is connected to the laminated segment (31), and the bending segment (32) is configured for bending;
wherein a region of the laminated segment (31) close to the bending segment (32) is provided with a reinforcing structure (33).

2. The electrode plate according to claim 1, wherein the reinforcing structure (33) comprises a protrusion structure protruding from a surface of the laminated segment (31).

3. The electrode plate according to claim 2, wherein a ratio of a protrusion height of the protrusion structure relative to the laminated segment (31) to a thickness of the laminated segment (31) is within a value range of [0.3, 50], optionally [5, 40], and preferably [8, 20].

4. The electrode plate according to claim 2 or 3, wherein the protrusion structure protrudes relative to a first surface (311) of the laminated segment (31), the protrusion structure is recessed relative to a second surface (312) of the laminated segment (31), and the first surface (311) and the second surface (312) are disposed opposite each other; and/or,
the protrusion structure comprises a reinforcing sheet disposed on a surface of the laminated segment (31).

5. The electrode plate according to any one of claims 1 to 4, wherein a ratio of a stiffness of the reinforcing structure (33) to a stiffness of other regions of the laminated segment (31) than the reinforcing structure (33) is within a value range of [1.5, 65], optionally [2, 40], and preferably [10, 25].

6. The electrode plate according to any one of claims 1 to 5, wherein a stiffness of the reinforcing structure (33) is within a value range of [10 N/m, 300 N/m], preferably [50 N/m, 150 N/m].

7. The electrode plate according to any one of claims 1 to 6, wherein the reinforcing structure (33) does not cross a centerline of the laminated segment (31) in a length direction of the electrode plate, and a ratio of a span of the reinforcing structure (33) along the length direction of the electrode plate to a length of the laminated segment (31) is within a value range of [10%, 50%].

8. The electrode plate according to any one of claims 1 to 6, wherein a ratio of a span of the reinforcing structure (33) along a length direction of the electrode plate to a length of the laminated segment (31) is within a value range of [10%, 100%].

9. The electrode plate according to any one of claims 1 to 8, wherein a ratio of a width sum of all the reinforcing structures (33) arranged along a width direction of the electrode plate to a width of the electrode plate is within a value range of [1/3, 0.8], preferably [0.4, 0.6].

10. The electrode plate according to any one of claims 1 to 9, wherein a ratio of a shortest length between an end portion of the reinforcing structure (33) close to the bending segment (32) and a centerline of the bending segment (32) to a thickness of the electrode plate is within a value range of [0.016, 0.5], preferably [0.05, 0.4].

11. The electrode plate according to any one of claims 1 to 10, wherein the reinforcing structure (33) is inclined relative to a width direction of the electrode plate.

12. The electrode plate according to claim 11, wherein an included angle between the reinforcing structure (33) and the width direction of the electrode plate is within a value range of [45°, 135°].

13. The electrode plate according to any one of claims 1 to 12, wherein a region of the laminated segment (31) close to the bending segment (32) is provided with multiple reinforcing structures (33) arranged along a width direction of the electrode plate.

14. The electrode plate according to claim 13, wherein the multiple reinforcing structures (33) are arranged at an equal interval along the width direction of the electrode plate.

15. The electrode plate according to claim 13 or 14, wherein the multiple reinforcing structures (33) protrude from a surface of the laminated segment (31) in a same protrusion direction.

16. The electrode plate according to any one of claims 1 to 15, wherein the electrode plate comprises multiple laminated segments (31), the bending segment (32) is connected to a first laminated segment (313) and a second laminated segment (314) among the multiple laminated segments (31), and a region of the first laminated segment (313) close to the bending segment (32) and a region of the second laminated segment (314) close to the bending segment (32) are each provided with the reinforcing structure (33).

17. The electrode plate according to claim 16, wherein the reinforcing structure (331) of the first laminated segment (313) and the reinforcing structure (332) of the second laminated segment (314) are correspondingly positioned in the width direction of the electrode plate; and/or,
the reinforcing structure (331) of the first laminated segment (313) and the reinforcing structure (332) of the second laminated segment (314) are misaligned in the width direction of the electrode plate.

18. The electrode plate according to claim 17, wherein the reinforcing structure (331) of the first laminated segment (313) and the reinforcing structure (332) of the second laminated segment (314) are arranged at an equal interval in the width direction of the electrode plate.

19. The electrode plate according to any one of claims 16 to 18, wherein the reinforcing structure (331) of the first laminated segment (313) comprises a protrusion structure protruding from a surface of the first laminated segment (313), and the reinforcing structure (332) of the second laminated segment (314) comprises a protrusion structure protruding from a surface of the second laminated segment (314),
wherein a protrusion direction of the reinforcing structure (331) of the first laminated segment (313) is opposite to a protrusion direction of the reinforcing structure (332) of the second laminated segment (314).

20. The electrode plate according to any one of claims 1 to 19, wherein the bending segment (32) is provided with a notch (34) extending along a width direction of the electrode plate.

21. The electrode plate according to claim 20, wherein there are multiple notches (34), and the reinforcing structure (33) corresponds to a connecting region between two adjacent notches (34) among the multiple notches (34).

22. The electrode plate according to claim 20 or 21, wherein there are multiple notches (34), and the multiple notches (34) comprise edge notches (341) located at two ends of the electrode plate along the width direction of the electrode plate and a middle notch (342) located in a middle region of the electrode plate, wherein a length of the edge notch (341) along the width direction of the electrode plate is greater than a length of the middle notch (342) along the width direction of the electrode plate.

23. The electrode plate according to claim 20 or 21, wherein there are multiple notches (34), and along the width direction of the electrode plate, the lengths of the multiple notches (34) are equal.

24. The electrode plate according to any one of claims 20 to 23, wherein along a length direction of the electrode plate, the notch (34) is located in a middle portion of the bending segment (32).

25. The electrode plate according to any one of claims 1 to 24, wherein the electrode plate is an anode-free negative electrode plate.

26. An electrode assembly, comprising:
a first electrode plate (30), wherein the first electrode plate (30) is the electrode plate according to any one of claims 1 to 25, and the first electrode plate (30) is configured to be bent at the bending segment (32).

27. The electrode assembly according to claim 26, wherein the reinforcing structure (33) is an indentation on the surface of the laminated segment (31).

28. The electrode assembly according to claim 26 or 27, wherein the electrode assembly further comprises:
multiple second electrode plates (40) with a polarity opposite to that of the first electrode plate (30), wherein the multiple second electrode plates (40) and the multiple laminated segments (31) are alternately laminated along a thickness direction of the laminated segments (31).

29. The electrode assembly according to claim 28, wherein the first electrode plate (30) comprises multiple bending segments (32), and two bending segments (32) at two ends of the same laminated segment (31) have opposite bending directions.

30. A battery cell, comprising:
the electrode assembly according to any one of claims 26 to 29.

31. A battery, comprising:
multiple battery cells, wherein the battery cell comprises the electrode assembly according to any one of claims 26 to 29.

32. An electric device, comprising:
the battery cell according to claim 30, or the battery according to claim 31, wherein the battery cell or the battery is configured to provide electrical energy to the electric device.

33. A method for manufacturing electrode assembly, comprising:
providing a first electrode plate (30), wherein the first electrode plate (30) comprises a laminated segment (31) and a bending segment (32), the bending segment (32) is connected to the laminated segment (31), and a region of the laminated segment (31) close to the bending segment (32) is provided with a reinforcing structure (33); and
bending the first electrode plate (30) at the bending segment (32) to form the electrode assembly.

34. The method according to claim 33, wherein the method further comprises:
stamping the laminated segment (31) along the thickness direction of the laminated segment (31) to form a protrusion structure on the surface of the laminated segment (31), the reinforcing structure (33) comprising the protrusion structure; and
pressing the laminated segment (31) of the electrode assembly.

35. The method according to claim 34, wherein the pressing the laminated segment (31) of the electrode assembly comprises:
pressing the laminated segment (31) of the electrode assembly by hot pressing.
